(19) Europäisches Patentamt
European Patent Office
Office européen des brevets

(11) **EP 3 558 879 B1**

(12) **EUROPÄISCHE PATENTSCHRIFT**

(45) Veröffentlichungstag und Bekanntmachung des Hinweises auf die Patenterteilung:
**05.07.2023 Patentblatt 2023/27**

(21) Anmeldenummer: **17816868.8**

(22) Anmeldetag: **19.12.2017**

(51) Internationale Patentklassifikation (IPC):
**C03B 18/02** (2006.01)   **B32B 17/10** (2006.01)
**C03B 23/023** (2006.01)   **C03C 3/087** (2006.01)
**C03C 3/093** (2006.01)   **C03C 21/00** (2006.01)

(52) Gemeinsame Patentklassifikation (CPC):
**C03B 18/02; C03C 3/087; C03C 3/093**

(86) Internationale Anmeldenummer:
**PCT/EP2017/083554**

(87) Internationale Veröffentlichungsnummer:
**WO 2018/114956 (28.06.2018 Gazette 2018/26)**

(54) **VERFAHREN ZUR HERSTELLUNG EINES DÜNNGLASSUBSTRATS**

METHOD FOR PRODUCING A THIN GLASS SUBSTRATE

PROCÉDÉ DE PRODUCTION D'UN SUBSTRAT EN VERRE MINCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2016 DE 102016125488**
**20.10.2017 DE 102017124625**

(43) Veröffentlichungstag der Anmeldung:
**30.10.2019 Patentblatt 2019/44**

(60) Teilanmeldung:
**23154744.9**

(73) Patentinhaber: **SCHOTT AG**
**55122 Mainz (DE)**

(72) Erfinder:
• **VOGL, Armin**
**07751 Jena (DE)**
• **SCHMIADY, Thomas**
**07749 Jena (DE)**
• **ZACHAU, Thilo**
**07778 Neuengoenna (DE)**
• **ALKEMPER, Jochen**
**55270 Klein-Winternheim (DE)**
• **MEISTER, Michael**
**55291 Saulheim (DE)**
• **KUNERT, Christian**
**65195 Wiesbaden (DE)**
• **KLIPPE, Lutz**
**65185 Wiesbaden (DE)**
• **DIETRICH, Rüdiger**
**07745 Jena (DE)**

(74) Vertreter: **Blumbach · Zinngrebe Patentanwälte PartG mbB**
**Alexandrastraße 5**
**65187 Wiesbaden (DE)**

(56) Entgegenhaltungen:
WO-A1-2016/007812     WO-A1-2016/048815
AU-B2- 473 784     US-A- 3 843 344
US-A- 3 961 930

• DATABASE WPI Week 201539 10. Juni 2015 (2015-06-10) Thomson Scientific, London, GB; AN 2015-32950R XP002778305, -& JP 2015 105216 A (ASAHI GLASS CO LTD) 8. Juni 2015 (2015-06-08)

**Beschreibung**

Die Erfindung betrifft ein Verfahren zur Herstellung eines Dünnglassubstrats. Ferner werden Messverfahren zur Ermittlung der optischen Qualität insbesondere von verfahrensgemäß hergestellten Dünnglassubstraten angegeben.

Dünnglassubstrate sind von zunehmender Bedeutung, auch in der Kraftfahrzeugtechnik, da mit diesen nicht nur das Gewicht des Kraftfahrzeugs gesenkt, sondern auch die optischen Eigenschaften von dessen Verglasung maßgeblich beeinflusst werden können.

Mit zunehmenden Anforderungen an die optischen Eigenschaften dieser Substrate, beispielsweise bei der Einblendung von zweidimensionalen Informationen in Rückprojektion oder bei der sensorischen Erfassung optischer Daten aus dem Umfeld des Kraftfahrzeugs entsteht ein zunehmender Bedarf an optisch hochwertigen Dünnglassubstraten und entsprechenden Weiterentwicklungen zur Verminderung von deren Gewicht. Insbesondere in der E-Mobilität, somit bei elektrisch angetriebenen Fahrzeugen, kommt der Gewichtsreduktion der Verglasung des Fahrzeugs hohe Bedeutung zu.

Das Dokument DE 23 09 445 A1 betrifft ein Verfahren zur Herstellung von dünnem Floatglas von weniger als 2,5 mm Dicke, bei dem geschmolzenes Glas in freiem Fall auf ein Metallbad aufgegossen wird, wo es sich im Viskositätsbereich von bis zu $10^{5,25}$ Poise ohne den Eingriff von seitlichen Führungsrollen zu einer gleichmäßig dicken Schicht frei ausbreitet, worauf das Glasband im folgenden Abschnitt des Floatbades in verformbarem Zustand gehalten und unter Erhöhung seiner Geschwindigkeit in Längsrichtung gestreckt wird, wobei in diesem Verformungsbereich ausschließlich mittels von oben auf die Randbereiche des Glasbandes einwirkender Rollen auf das Glasband Kräfte ausgeübt werden, die die Streckwirkung der Zugkraft fortschreitend steuern, um ein allmähliches Strecken auf eine vorgegebene Dicke zu bewirken.

Das Dokument JP 7-53223 A beschreibt als Overhead Coolers bezeichnete Kühleinrichtungen zur Verbesserung der optischen Qualität, insbesondere zur Reduzierung einer als Microcorrugation bezeichneten optischen Eigenschaft, nach der Hauptformgebung, nach Einsatz der Top-Roller-Zugeinrichtungen. Jedoch wirkt sich dabei die Reduzierung der Microcorrugation nur unwesentlich auf die optische Auffälligkeit der Ziehstreifigkeit aus.

Die PCT-Anmeldung WO 2016048815 A1 beschreibt eine Vorrichtung und Verfahren zur Heißformung von Glas. Es werden in diesem Dokument Vorrichtungen offenbart, welche oberhalb eines Floatbads zur Heißformung von Glas zu einem Glasband an Stellen mit bereits ausgebildetem Glasband angeordnet sind und die lokale Temperatur des Glasbandes während seiner Heißformung beeinflussen können.

Der koreanischen Patentanmeldung KR 20150063947 A ist eine Vorrichtung und ein Verfahren zur Herstellung von Floatglas zu entnehmen, bei welcher Glas auf einem geschmolzenen Metallbad unter Zugspannung geführt wird und mittels an einem über dem Metallbad angeordneten Deckengewölbe angebrachten Heizeinrichtungen bereichsweise erwärmt wird. Ferner kann dem Glas direkt beim Eintritt in eine Heißformgebungsanlage auch Wärme entzogen werden, aber herkömmlich nur in geringem Maße.

Der Erfindung liegt die Aufgabe zugrunde, ein Verfahren zur Herstellung eines Dünnglassubstrats mit verbesserter optischer Qualität bereitzustellen.

Diese Aufgabe wird mit dem in Anspruch 1beschriebenen Verfahren gelöst. Vorteilhafte Weiterbildungen sind den jeweiligen abhängigen Ansprüchen sowie der Beschreibung zu entnehmen.

In überraschender Weise haben die Erfinder herausgefunden, dass diese Ziehstreifen mit einem Verfahren zur Herstellung eines Dünnglassubstrats, vorzugsweise zur kontinuierlichen Herstellung eines Dünnglassubstrats, insbesondere eines Dünnglassubstrats mit verminderten Ziehstreifen, verminderbar sind, bei welchem nach dem Schmelzen und vor einer Heißformung die Viskosität des zu formenden oder zumindest teilweise geformten Glases für das zu erhaltende Dünnglassubstrat definiert eingestellt wird und das heißzuformende Glas vor Abgabe an eine Einrichtung zur Heißformung in dessen Viskosität definiert eingestellt, insbesondere durch eine definierte Abkühlung eingestellt wird. Alle nachfolgenden Angaben, insbesondere numerischen Angaben zur Viskosität sind in lg $\eta$ /dPas angegeben, auch wenn dieses um der Kürze Willen und wie auf diesem technischen Gebiet üblich nicht immer explizit angegeben wird.

Als Verminderung der Ziehstreifen wird hierbei verstanden, dass eine Verminderung der Größe der Ziehstreifen eintritt, dies bedeutet des Volumens der durch die Ziehstreifen gebildeten Erhebungen gegenüber einem ideal planen Substrat, insbesondere Dünnglassubstrat. Zum Vergleich der Verminderung dient hierbei ein Verfahren, bei welchem die Viskosität des heißzuformenden Glases vor vor dem Lippenstein für die Abgabe des flüssigen Glases, dem Spout, welcher auch als Einlauflippe bezeichnet wird, beispielsweise lg $\eta$ / dPas 3,47 betrug, welches in der nachfolgenden detaillierten Beschreibung noch detaillierter anhand konkreter Messergebnisse dargelegt wird. Sowohl bei den erfindungsgemäß hergestellten Gläsern als auch den herkömmlichen Vergleichsgläsern wurden für die nachfolgenden Vergleichsmessungen jeweils Gläser mit einer Zusammensetzung verwendet, wie diese für das Dünnglassubstrat beispielhaft in Anspruch 28 angegeben und bei der nachfolgenden Beschreibung der am Dünnglassubstrat durchgeführten Messungen noch stärker konkretisiert wird.

Ferner wird allgemein ein Dünnglassubstrat als Dünnglassubstrat mit verminderten Ziehstreifen verstanden, bei welchem Erhebungen auf einer der Hauptoberflächen des Dünnglassubstrats, insbesondere langgezogene Erhebungen, welche sich im Wesentlichen in Normalenrichtung erheben und bei welchen eine Längserstreckung größer als das Zweifache, bevorzugt Dreifache, besonders bevorzugt das Fünffache einer Quererstreckung der Erhebung ist, welche eine Höhe aufweisen, die im Mittel, bereinigt von keilförmigen Dickenschwankungen und Verwölbungen bei arithmetischer Mittelung einer Analysefläche von 10 * 10 cm$^2$, vorzugsweise in der Mitte eines heißgeformten Glasbands senkrecht zur Ziehrichtung, kleiner als 100 nm, bevorzugt kleiner als 90 nm, besonders bevorzugt kleiner als 80 nm ist und bei welchen die Quererstreckung der Erhebung jeweils kleiner als 40 mm ist.

Frühere mathematische Modelle haben nahegelegt, dass höhere Verarbeitungstemperaturen auch höhere optische Qualität bereitstellen, weshalb die mit einer Temperaturabsenkung einhergehende erhöhte Viskosität zunächst nicht als erfolgversprechende Maßnahme zur Erzielung verbesserter optischer Qualität erschien.

Insbesondere bei der kontinuierlichen Herstellung von Dünnglassubstraten wurde bisher Wert daraufgelegt, die Strecke zwischen der das heißzuformende Glas abgebenden Schmelzwanne und dem ein flüssiges Metall umfassenden Floatbad räumlich möglichst kurz und verfahrenstechnisch direkt zu gestalten. Ferner sind mit niedrigen Temperaturen einhergehende höhere Viskositäten des zu erschmelzenden Glases für Schmelzwannen eher nachteilig, da sich mit zunehmender Viskosität auch die Homogenisierung des Glases schwieriger gestalten kann. Ferner steht eine Abkühlung des heißzuformenden Glases regelmäßig einem hohen Durchsatz entgegen, da das dann nur zäher fließende Glas innerhalb der heißformenden Prozesskette die Tendenz aufweist, die Durchflussgeschwindigkeit zu senken. Besonders nachteilig erschien deshalb bisher ein die Temperatur absenkender Eingriff in die Prozesskette der Heißformung, insbesondere wenn dieser zu einem frühen Zeitpunkt erfolgte und somit die gesamte Prozesskette betraf.

Bei einem bevorzugten Verfahren zur Herstellung eines Dünnglassubstrats wird eine Einstellung der Viskosität vor dem Lippenstein für die Abgabe des flüssigen Glases, dem Spout, vorgenommen, insbesondere vor der Abgabe auf ein Metallbad vorgenommen.

Überraschend ist der erfindungsgemäße verfahrenstechnische Eingriff vor Spout, da herkömmliche Floatanlagen regelmäßig konstruktiv nicht dazu ausgelegt sind, Eingriffe vor Spout zuzulassen.

Im Rahmen dieser Offenbarung sollen die Begriffe "vor" und "nach" zunächst räumliche Bedeutung haben. Hierbei bezeichnet der Begriff "vor" einen in Strömungs- oder Ziehrichtung des Glases räumlich vor einem weiteren Objekt liegenden Ort und der Begriff "nach" oder "hinter" einen in Strömungs- oder Ziehrichtung des Glases räumlich nach oder hinter einem weiteren Objekt liegenden Ort. Da jedoch bei der vorliegenden Erfindung das Glas kontinuierlich bewegt wird oder sich kontinuierlich bewegt, kann sich hieraus, insbesondere für die Durchführung des Verfahrens auch eine entsprechende zeitliche Abfolge für die jeweiligen Verfahrensschritte, insbesondere auch innerhalb einer industriellen Prozesskette, ergeben.

Bei einem bevorzugten Verfahren zur Herstellung eines Dünnglassubstrats wird eine Einstellung der Viskosität vor dem Regelschieber, somit dem Bauteil zur Durchsatzregulierung des Glasstroms, welches auch als Tweel bezeichnet wird, vorgenommen und wird insbesondere vor der Abgabe auf ein Metallbad, somit vor Abgabe auf das flüssige Metall des Floatbades vorgenommen.

Definiert eingestellt bedeutet hierbei im Rahmen der vorliegenden Offenbarung, dass eine Einstellung der Viskosität so vorgenommen wird, dass diese innerhalb definierter Grenzen eingestellt wird. Dies bedeutet insbesondere auch, dass das Glas nach dieser Einstellung somit die eingestellte Viskosität $\eta$ des Glases mit einer Abweichung bezüglich des tatsächlich erwünschten Werts und somit einer Abweichung von der definiert eingestellten Viskosität von weniger als $\Delta$ lg $\eta$ / dPas = 0,3 bei einer Entfernung von 12m nach einem Ort unmittelbar hinter dem Tweel, $\Delta$ lg $\eta$ / dPas = 0,2 bei einer Entfernung von 1,5m nach dem Ort unmittelbar hinter dem Tweel, $\Delta$ lg $\eta$ / dPas = 0,1 unmittelbar vor Tweel vorliegt.

Bei einem bevorzugten Verfahren zur Herstellung eines Dünnglassubstrats beträgt die Viskosität des zu formenden oder zumindest teilweise geformten Glases bevorzugt am Kanal-Ende der Schmelzwanne und vor dem Tweel, insbesondere unmittelbar vor dem Tweel mindestens lg $\eta$ /dPas = 3,75 bis vorzugsweise höchstens 4,5 und/oder am Anfang des Bays 1, somit in einer Entfernung in Ziehrichtung von bis zu 1,5 m nach dem Tweel mindestens lg $\eta$ /dPas = 5,25 bis vorzugsweise höchstens 5,85 und/oder am Anfang des Bays 4 somit in einer Entfernung in Ziehrichtung von bis zu 12 m nach dem Tweel mindestens lg $\eta$ /dPas = 7,05 bis vorzugsweise höchstens 7,6.

Bei einer besonders bevorzugten Ausführungsform gilt für die Viskosität $\eta_1$ für eine erste Strecke für eine Entfernung bis zu 1,5 m nach dem Tweel die nachfolgende Gleichung, bei welcher $y_1$ jeweils die Entfernung zum dem Ort unmittelbar hinter dem Tweel bezeichnet und somit unmittelbar hinter dem Tweel den Wert Null annimmt:

$$\lg \eta_1(y_1) \ /\mathrm{dPas} = (\lg \eta_{01} \ /\mathrm{dPas} + a_1(y_1))$$

mit

$$0 \ \mathrm{m} \leq y_1 \leq 1,5 \ \mathrm{m}$$

$$3,75 \leq \lg \eta_{01} /dPas \leq 4,5$$

$$a_1(y_1) = 1,00 /m * y_1.$$

Diese Gleichung soll nicht zwingend eine lineare Abhängigkeit für $\lg \eta_1(y_1)$ /dPas von dem Wert y angeben, obwohl diese abschnittsweise zu großen Teilen vorliegt, sondern jeweils auch den Wertebereich für $\lg \eta_1(y_1)$ an einem festen Ort $y_1$ angeben, wenn $\lg \eta_{01}$ in dem vorstehenden Intervall variiert wird.

Bei bevorzugten Ausführungsformen der Erfindung wies die Änderung der Viskosität im Bereich von $0 \, m \leq y_1 \leq 1,5 \, m$ pro Längeneinheit von einem Meter einen Wert auf, welcher besonders bevorzugt $\Delta \lg \eta / dPas / \Delta y = 0,666$ /m +/- 0,1 /m betrug, jedoch größer als 0,334 /m und kleiner als 0,8 /m war, wobei der Ausdruck $\Delta \lg \eta / dPas$ bei dieser Gleichung nicht eine Abweichung der Viskosität bezüglich des tatsächlich erwünschten Werts, sondern die Änderung der Viskosität auf dem Abstandsbereich $\Delta y$ bezeichnet.

Bei einer weiteren bevorzugten Ausführungsform gilt für die Viskosität $\eta_2$ für eine zweite Strecke mit einer Entfernung von 12 m nach dem Tweel bis zu einer Entfernung von 16 m nach dem Tweel für die Viskosität $\eta_2$ die nachfolgende Gleichung gilt, bei welcher $y_2$ jeweils die Entfernung zum Ort unmittelbar hinter dem Tweel bezeichnet:

$$\lg \eta_2(y_2) /dPas = (\lg \eta_{02} /dPas + a_2(y_2))$$

mit

$$12 \, m \leq y_2 \leq 16 \, m$$

$$7,05 \leq \lg \eta_{02} /dPas \leq 7,6$$

$$a_2(y_2) = 0,788 /m * (y_2 - 12 \, m).$$

Diese Gleichung soll nicht zwingend eine lineare Abhängigkeit für $\lg \eta_2(y_2)$ /dPas von dem Wert y angeben, obwohl diese abschnittsweise zu großen Teilen vorliegt, sondern jeweils auch den Wertebereich für $\lg \eta_2(y_2)$ an einem festen Ort $y_2$ angeben, wenn $\lg \eta_{02}$ in dem vorstehenden Intervall variiert wird.

An dieser Stelle, wie auch im gesamten Verlauf dieser Offenbarung beschreibt die Angabe eines Abstands oder einer Entfernung "nach dem Tweel" oder "hinter dem Tweel", auch wenn jeweils nicht explizit angegeben, den Abstand in Y-Richtung von einem Ort, der unmittelbar hinter dem Tweel 17 liegt oder an der in Strömungsrichtung gesehen hinteren Seite des Tweels 17 liegt bis zu demjenigen Ort, bis zu welchem dieser Abstand oder eine entsprechende Entfernung jeweils angegeben ist.

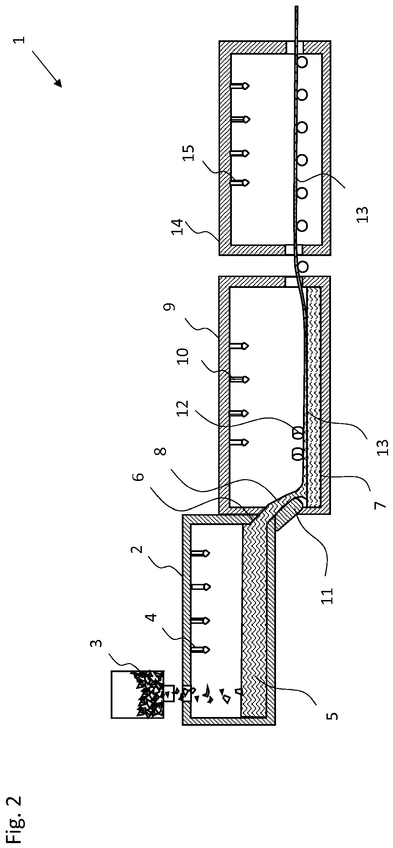

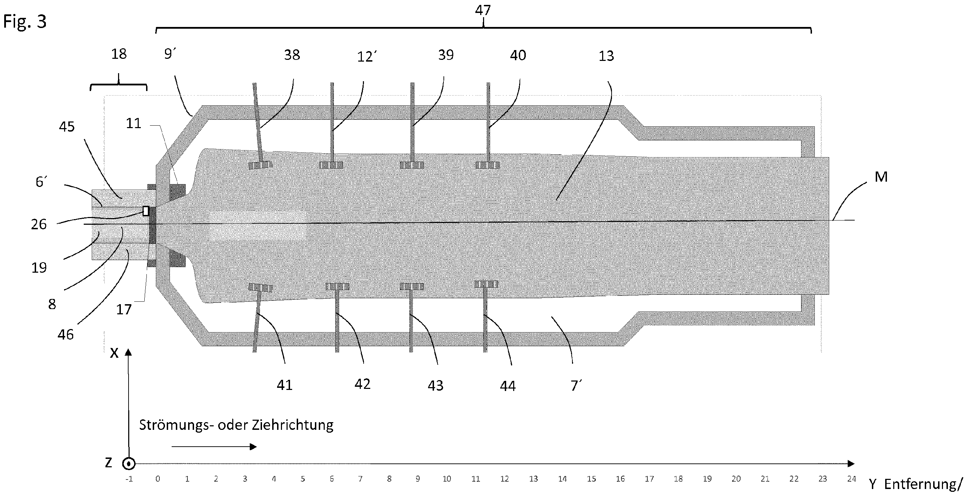

Diese Entfernung ist beispielhaft in den Figuren 2 und 3 in Y-Richtung als Wert in m angegeben. Konstruktiv kann der Anfang des Floatbades, wie vorliegend der Fall, auch mit dem Ende des Tweels, insbesondere dessen in Strömungs- oder Ziehrichtung hintersten Teil zusammenfallen.

Bei dem bevorzugten Verfahren zur Herstellung eines Dünnglassubstrats beträgt die Temperatur des zu formenden oder zumindest teilweise geformten Glases bei dem Glas, für welches die nachfolgenden Messungen der Ziehstreifen oder langgestreckten Erhebungen an der Oberfläche und dessen Dicke beschrieben werden, bevorzugt am Kanal-Ende der Schmelzwanne und vor dem Tweel, insbesondere unmittelbar vor dem Tweel mindestens 1000 °C und höchstens 1100 °C und/oder am Anfang des Bays 1 somit in einer Entfernung in Ziehrichtung von bis zu 1,5 m mindestens 850 °C und höchstens 910 °C und/oder am Anfang des Bays 4 somit in einer Entfernung in Ziehrichtung von bis zu 12 m nach dem Tweel mindestens 720°C und höchstens 760 °C beträgt. Hierbei lag jeweils eine maximale Temperaturabweichung von höchstens 10 °C vor. Eine definierte Einstellung der Temperatur umfasst im Sinne dieser Offenbarung eine Einstellung der Temperatur des heißzuformenden Glases vor oder während dessen Heißformung, welche innerhalb der vorstehend angegebenen maximalen Temperaturabweichungen liegt. Eine definierte Abkühlung des Glases umfasst im Sinne dieser Offenbarung eine Absenkung der Temperatur des heißzuformenden Glases vor oder während dessen Heißformung, bei welcher die angegebenen Temperaturen ebenfalls innerhalb der vorstehend angegebenen maximalen Temperaturabweichungen liegen.

Dem Fachmann ist es bekannt, wie Temperaturen von Zinnbädern gesteuert werden können, und auch, wie die Temperatur in verschiedenen Bays von Zinnbädern eingestellt werden kann.

Bevorzugt wird bei dem Verfahren zur Herstellung eines Dünnglassubstrats zur Heißformung ein Ziehverfahren, insbesondere ein Floatverfahren, ein Dow-Draw-Verfahren und/oder ein Fusion-Verfahren, insbesondere ein Overflow-Fusion-Downdraw-Verfahren verwendet.

Bei dem Verfahren zur Herstellung eines Dünnglassubstrats kann vorteilhaft zur Heißformung des Dünnglassubstrats ein Li-Al-Si-Glas, ein Al-Si-Glas, ein Borosilicatglas oder ein K-Na-Si-Glas verwendet werden.

Insbesondere kann dabei ein Li-Al-Si-Glas, insbesondere mit einem $Li_2O$-Gehalt von 4,6 Gew.-% bis 5,4 Gew.-% und einem $Na_2O$-Gehalt von 8,1 Gew.-% bis 9,7 Gew.-% und einem $Al_2O_3$-Gehalt von 16 Gew.-% bis 20 Gew.-% verwendet werden.

Bei einem besonders bevorzugten Verfahren zur Herstellung eines Dünnglassubstrats werden Erhebungen auf einer der Hauptoberflächen des Dünnglassubstrats, insbesondere langgezogene Erhebungen, welche sich im Wesentlichen in Normalenrichtung erheben, ausgebildet, welche eine Längserstreckung größer als das Zweifache, bevorzugt Dreifache, besonders bevorzugt das Fünffache einer Quererstreckung der Erhebung aufweisen und eine Höhe aufweisen, die im Mittel, bereinigt von keilförmigen Dickenschwankungen und Verwölbungen bei arithmetischer Mittelung einer Analysefläche von 10 * 10 $cm^2$, vorzugsweise in der Mitte eines heißgeformten Glasbands senkrecht zur Ziehrichtung, kleiner als 100 nm, bevorzugt kleiner als 90 nm, besonders bevorzugt kleiner als 80 nm ist und bei welchen die Quererstreckung der Erhebung jeweils kleiner als 40 mm ist.

Bei dem Verfahren zur Herstellung eines Dünnglassubstrats weist bei einer Ausführungsform durch die Heißformung das Dünnglassubstrat im Wesentlichen eine keilförmige Dickenänderung über eine Länge von 1 m senkrecht zur Ziehrichtung einen Wert von weniger als 100 $\mu$m auf.

Bei dem Verfahren zur Herstellung eines Dünnglassubstrats weist bei einer Ausführungsform durch die Heißformung das Dünnglassubstrat ferner eine Verwölbung über eine Länge von 1 m senkrecht zur Ziehrichtung einen Wert von weniger als 600 $\mu$m auf.

Durch die Heißformung kann das Dünnglassubstrat bevorzugt eine mittlere Dicke, arithmetisch gemittelt über eine Fläche der ersten und der zweiten Hauptoberfläche des Dünnglassubstrats von mindestens 10 cm * 10 cm von 0,3 mm bis 2,6 mm erhalten, bevorzugt eine Dicke von 0,7 mm bis 2,5 mm erhalten, besonders bevorzugt eine Dicke von etwa 0,7 mm oder eine Dicke von etwa 2,54 mm erhalten.

In weiterer Ausgestaltung können Dicken des Glassubstrats bis 10 mm oder sogar bis 12 mm mit allen Vorteilen der Erfindung erhalten werden.

Bei dem Verfahren zur Herstellung eines Dünnglassubstrats beträgt bei bevorzugten Ausführungsformen nach der Heißformung des Dünnglassubstrats bei einem Durchsatz von weniger als 400 t, bevorzugt 200 t, und am bevorzugtesten 100 t Glas an heißgeformtem Dünnglas pro Tag der Anteil des Gutglases mehr als 15 % des gesamten Glasdurchsatzes.

Eine Vorrichtung zur Herstellung eines Dünnglassubstrats, insbesondere eines Dünnglassubstrats mit verminderten Ziehstreifen, insbesondere zur Durchführung eines hier offenbarten Verfahrens umfasst eine Einrichtung zum Schmelzen, eine Einrichtung zur Heißformung sowie eine Einrichtung zur definierten Einstellung der Viskosität des zu einem Dünnglassubstrat zu formenden Glases, bei welcher eine, insbesondere die Einrichtung zur definierten Einstellung der Viskosität des zu einem Dünnglassubstrat zu formenden Glases vor der Einrichtung zur Heißformung angeordnet ist.

Diese oder eine Einrichtung zur definierten Einstellung der Viskosität des zu einem Dünnglassubstrat zu formenden Glases ist bei besonders bevorzugten Ausführungsformen vor dem Spout angeordnet.

Bei einer bevorzugten Ausführungsform kann eine, insbesondere die Einrichtung zur definierten Einstellung der Viskosität des zu einem Dünnglassubstrat zu formenden Glases auch vor dem Tweel, insbesondere unmittelbar vor dem Tweel angeordnet sein.

Besonders bevorzugt umfasst die Einrichtung zur definierten Einstellung der Viskosität eine Kühleinrichtung.

Hierbei kann die Einrichtung zur definierten Einstellung der Viskosität fluiddurchströmte Bereiche umfassen, insbesondere von Wasser durchströmte Bereiche umfassen, welche Wärme von dem heißzuformenden Glas aufnehmen.

Diese Wärmeaufnahme kann beispielhaft durch direkte Wärmeleitung oder auch durch Aufnahme von Konvektionswärme erfolgen.

Bei dieser Vorrichtung ist die hier angegebene Viskosität des Glases vorteilhaft jeweils mit einer Abweichung von höchstens $\Delta$ lg $\eta$ / dPas = 0,1 an einem Ort unmittelbar vor Tweel, $\Delta$ lg $\eta$ / dPas = 0,2 bei einer Entfernung von 1,5 m nach Tweel und $\Delta$ lg $\eta$ / dPas = 0,3 /dPas bei einer Entfernung von 12 m nach Tweel einstellbar.

Ferner kann bei einer bevorzugten Vorrichtung eine sensorische Einheit die Temperatur des heißzuformenden Glases, insbesondere mit einer maximalen Abweichung von 10 °C erfassen, und/oder die Viskosität des heißzuformenden Glases erfassen, insbesondere mit einer maximalen Abweichung von $\Delta$ lg $\eta$ / dPas = 0,1 unmittelbar vor Tweel, $\Delta$ lg $\eta$ / dPas = 0,2 bei 1,5 m nach Tweel und $\Delta$ lg $\eta$ / dPas = 0,3 /dPas bei 12 m nach Tweel 0,3 /dPas erfassen.

Die Einrichtung zur Heißformung kann bei bevorzugten Ausführungsformen eine Zieheinrichtung, eine Floateinrichtung, insbesondere eine Down-Draw-, insbesondere eine Overflow-Down-Draw-Fusion-Zieheinrichtung umfassen.

Ein Dünnglassubstrat einer bevorzugten Ausführungsform weist Erhebungen auf einer der Hauptoberflächen des Dünnglassubstrats auf, insbesondere langgezogene Erhebungen, welche sich im Wesentlichen in Normalenrichtung erheben und bei welchen eine Längserstreckung größer als das Zweifache, bevorzugt Dreifache, besonders bevorzugt das Fünffache einer Quererstreckung der Erhebung ist, und welche eine Höhe aufweisen, die im Mittel, bereinigt von keilförmigen Dickenschwankungen und Verwölbungen bei arithmetischer Mittelung einer Analysefläche von $10 * 10\ cm^2$, vorzugsweise in der Mitte eines heißgeformten Glasbands senkrecht zur Ziehrichtung, kleiner als 100 nm, bevorzugt kleiner als 90 nm, besonders bevorzugt kleiner als 80 nm ist und bei welchen die Quererstreckung der Erhebung jeweils kleiner als 40 mm ist. Die vorstehend angegebenen Werte können jeweils auch alternativ mit anderen als den hier dargestellten Messverfahren, beispielsweise durch mechanische Abtastverfahren am Dünnglassubstrat ermittelt werden und werden hierbei die gleichen Messwerte ergeben. Optische Verfahren können jedoch berührungsfrei eingesetzt werden, sodass sich keine Veränderungen der Oberflächen, insbesondere keine Schädigungen, beispielsweise durch Verkratzung der Hauptoberflächen an den Orten der Messung ergeben.

Durch die Heißformung des Dünnglassubstrats kann das Dünnglassubstrat im Wesentlichen eine keilförmige Dickenänderung K über eine Länge von 1 m senkrecht zur Ziehrichtung mit einem Wert von weniger als 100 $\mu$m und/oder eine Verwölbung V über eine Länge von 1 m senkrecht zur Ziehrichtung mit einem Wert von weniger als 600 $\mu$m aufweisen.

Das Dünnglassubstrat kann bei bevorzugten Ausführungsformen eine mittlere Dicke, gemittelt über eine Fläche der ersten und der zweiten Hauptoberfläche des Dünnglassubstrats von mindestens 10 cm * 10 cm von 0,5 mm bis 2,6 mm erhalten, bevorzugt eine Dicke von 0,7 bis 2,5 mm, besonders bevorzugt eine Dicke von etwa 0,7 mm oder eine Dicke von etwa 2,54 mm erhalten. Ferner ist es auch möglich Glassubstrate mit einer Dicke bis zu 10 oder sogar 12 mm herzustellen.

Das Dünnglassubstrat kann ein Li-Al-Si-Glas, ein Al-Si-Glas, ein Borosilicatglas oder ein K-Na-Si-Glas umfassen.

Bevorzugt umfasst das Dünnglassubstrat jedoch ein Li-Al-Si-Glas, insbesondere ein Lithium-Aluminium-Silicatglas mit einem $Li_2O$-Gehalt von 4,6 Gew.-% bis 5,4 Gew.-% und einem $Na_2O$-Gehalt von 8,1 Gew.-% bis 9,7 Gew.-% und einem $Al_2O_3$-Gehalt von 16 Gew.-% bis 20 Gew.-%.

Das hier offenbarte Dünnglassubstrat kann in einer Kraftfahrzeugscheibe, insbesondere einer Verbundscheibe umfasst sein.

Auch eine Frontscheibenprojektionseinrichtung, insbesondere ein Head-up-Display, für auf dem Land, auf oder im Wasser sowie in der Luft betriebene Fahrzeuge, insbesondere motorbetriebene Fahrzeuge, kann vorteilhaft ein hier offenbartes Dünnglassubstrat, insbesondere als Rückreflexionsfläche, umfassen.

Besonders vorteilhaft ist somit die Verwendung eines Dünnglassubstrats auch als Teil einer Verbundglasscheibe und insbesondere als Teil einer Kraftfahrzeugscheibe.

Die Erfinder haben auch festgestellt, dass nicht jeder optische Fehler eines Dünnglassubstrates in gleicher Weise zu Störungen oder einer Minderung von dessen optischen Eigenschaften führen muss.

Erhebungen auf einer der Hauptoberflächen eines Dünnglassubstrats, insbesondere langgezogene Erhebungen, welche sich in einer Hauptrichtung, der Zieh- oder Fortbewegungsrichtung des heißzuformenden Glases auf dem Floatglas, erstrecken und herkömmlich auch als Ziehstreifen bezeichnet werden, können dann zu merklichen Verschlechterungen der optischen Eigenschaften führen, wenn diese eine bestimmte Größe überschreiten und sogar die Wirkung einer Zylinderlinse im jeweiligen optischen Strahlengang aufweisen. Derartige Erhebungen oder Ziehstreifen weisen in typischer Weise eine Quererstreckung von weniger als 40 mm auf.

Zur Klassifizierung derartiger optischer Beeinträchtigungen sind beispielsweise Schattenwurfverfahren eingesetzt worden, welche beispielsweise in der DIN 52305 beschrieben sind.

Diese Schattenwurfverfahren haben jedoch den Nachteil, dass in der Regel im Durchlicht betrieben, beide Seiten eines Glassubstrats erfasst werden und dabei keine Information zur optischen Wechselwirkung nur einer Seite gewonnen wird. Wenn diese Dünnglassubstrate beispielsweise für in Kraftfahrzeugen verwendete Head-up-Displays verwendet werden, ist jedoch anders als bei Durchsicht bereits die optische Qualität nur einer der beiden Hauptoberflächen von maßgeblicher Bedeutung. Soweit bei einer Messung in Rückreflexion maximale Abweichungswinkel eines optischen Messstrahls ermittelt werden, ist auch dieser Wert nur von untergeordneter Bedeutung, da hierbei keine ausreichende Information zu den Eigenschaften eines mit dieser gemessenen Hauptoberfläche gebildeten Systems vorliegen.

Folglich besteht auch ein Interesse daran, die optischen Eigenschaften eines Glassubstrats, insbesondere eines Dünnglassubstrats, mit höherer Aussagekraft erfassen zu können. Vorteilhaft wäre es hierbei, wenn ein derartiges Verfahren zu direkten Aussagen des Verhaltens innerhalb eines optischen Systems führen würde, wie beispielsweise zu Aussagen zu linsenartigen Brechkräften des gesamten gemessenen Feldes führen würde.

Von besonderem Vorteil wäre es, wenn dabei die jeweilige Hauptoberfläche eines Glassubstrats, insbesondere eines Dünnglassubstrats unabhängig von der jeweiligen anderen Hauptoberfläche dieses Dünnglassubstrats gemessen werden könnte.

Die Erfindung wird nachfolgend anhand der beigefügten Zeichnungen und unter Bezugnahme auf bevorzugte und besonders bevorzugte Ausführungsbeispiele detaillierter beschrieben.

Es zeigen:

| | | |
|---|---|---|
| Figur 1 | | eine schematische Schnittansicht einer Vorrichtung zur Herstellung eines Dünnglassubstrats einer bevorzugten Ausführungsform der Erfindung, bei welcher die Schnittebene vertikal in etwa durch die Mitte der Vorrichtung verläuft, |
| Figur 2 | | eine schematische Schnittansicht einer Vorrichtung zur Herstellung eines Dünnglassubstrats einer herkömmlichen Floatanlage, bei welcher die Schnittebene vertikal in etwa durch die Mitte der Vorrichtung verläuft, |
| Figur 3 | | eine schematische Aufsicht auf einen Teil einer Vorrichtung zur Herstellung eines Dünnglassubstrats einer bevorzugten Ausführungsform, insbesondere auf ein heißzuformendes Glasband auf einem Floatbad |
| Figur 4 | | den Verlauf der Viskosität des auf dem Floatbad befindlichen Glases in Strömungs- oder Ziehrichtung, welche als Y-Richtung eines kartesischen Koordinatensystems angegeben ist, |
| Figur 5 | | eine schematische Darstellung eines Messfeldes sowie eines Analysefeldes auf der Hauptoberfläche eines Dünnglassubstrates zur Messung der optischen Weglänge mittels eines Laserinterferometer, insbesondere eines Phase-Shift-Interferometers, |
| Figur 6 | | eine perspektivische Darstellung von mit dem Laserinterferometer erhaltenen Oberflächendaten, insbesondere der Oberflächenstruktur eines Dünnglassubstrates, in willkürlichen Einheiten, |
| Figur 7 | | eine Graustufendarstellung von mit dem Laserinterferometer erhaltenen Oberflächendaten eines Dünnglassubstrates, bei welchen die Dickenwerte von Ziehstreifen als Grauwerte zu erkennen sind, |
| Figur 8 | | eine Graustufendarstellung einer Ableitung in X-Richtung der mit dem Laserinterferometer erhaltenen Oberflächendaten eines Dünnglassubstrates, bei welchen die Ableitungswerte als Grauwerte zu erkennen sind, |
| Figur 9 | | eine Graustufendarstellung optischer Brechkräfte der mit dem Laserinterferometer erhaltenen Oberflächendaten eines herkömmlichen Dünnglassubstrates, bei welchen die Brechkräfte als Grauwerte zu erkennen sind, |
| Figur 10 | | eine Graustufendarstellung optischer Brechkräfte der mit dem Laserinterferometer erhaltenen Oberflächendaten eines erfindungsgemäß hergestellten Dünnglassubstrates, bei welchen die Brechkräfte als Grauwerte zu erkennen sind, |
| Figur 11 | | eine schematische Darstellung eines Messfeldes sowie eines Analysefeldes auf der Hauptoberfläche eines Dünnglassubstrates zur Messung der optischen Weglänge mittels eines Weißlichtinterferometers, insbesondere eines Fouriertransformations-Weißlichtinterferometers, FRT-Interferometer, |
| Figur 12 | | eine Graustufendarstellung von mit dem FRT-Interferometer erhaltenen Oberflächendaten eines Dünnglassubstrates, bei welchen die Dickenwerte von Ziehstreifen als Grauwerte zu erkennen sind, |
| Figur 13 | | eine Graustufendarstellung optischer Brechkräfte der mit dem FRT-Interferometer erhaltenen Oberflächendaten eines herkömmlichen Dünnglassubstrates, bei welchen die Brechkräfte als Grauwerte zu erkennen sind, |
| Figur 14 | | eine Graustufendarstellung optischer Brechkräfte der mit dem FRT-Interferometer erhaltenen Oberflächendaten eines erfindungsgemäß hergestellten Dünnglassubstrates, bei welchen die Brechkräfte als Grauwerte zu erkennen sind |
| Figur 15 und 16 | | jeweils eine schematische Darstellung einer Verbundglasscheibe gemäß bevorzugten Ausführungsformen der Erfindung, welche jeweils eine Reflexionsfläche für ein Head-up-Display aufweist. |

Detaillierte Beschreibung bevorzugter Ausführungsformen der Erfindung

Bei der nachfolgenden Beschreibung bevorzugter und besonders bevorzugter Ausführungsformen bezeichnen in den verschiedenen Figuren gleiche Bezugszeichen gleiche oder gleichwirkende Bestandteile der hier jeweils offenbarten Vorrichtung.

Zunächst wird auf die in Figur 2 dargestellte herkömmliche Anlage zur Herstellung von gefloatetem Glas Bezug genommen, welche insgesamt, wie nachfolgend auch die Vorrichtung das Bezugszeichen 1 trägt.

Diese Floatanlage weist einen auch als Schmelzwanne bezeichneten Einschmelzofen 2 auf, welchem in bekannter Weise ein zu erschmelzendes Glasgemenge 3 zugeführt und mittels Brennern 4 so lange erhitzt wird, bis sich eine Glasschmelze 5 der erwünschten Zusammensetzung ausbildet. Weitere Einrichtungen zur Homogenisierung der Glasschmelze sind dem Fachmann bekannt und werden folglich nicht detaillierter beschrieben.

Durch einen Kanal 6 gelangt das geschmolzene Glas der Glasschmelze 5, in der Regel unter dem Einfluss der Schwerkraft auf ein Floatbad 7, welches flüssiges Zinn aufweist und auf welchem sich das heißzuformende Glas 8 als Teil seiner Heißformung unter dem Einfluss der Schwerkraft unter Verminderung seiner Höhe seitlich ausbreiten kann.

Zur Einstellung der Temperatur des heißzuformenden Glases kann das Zinnbad 7 in einem Floatbadofen 9 angeordnet sein, welcher ebenfalls über Brenner 10 verfügt, mittels welchen die Temperatur des heißzuformenden Glases einstellbar ist.

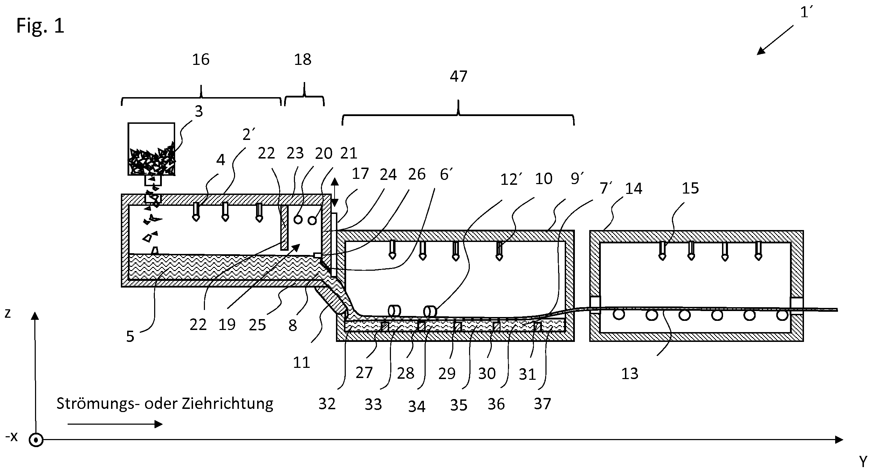

Beim Verlassen der Schmelzwanne 2 wird das geschmolzene, heißzuformende Glas 8 über eine auch als Spout bezeichnete schräg nach unten verlaufende Einlauflippe 11, auf welcher es sich bereits zur verbreitern beginnt, auf das Zinnbad 7 geführt. Mit walzenförmigen Top-Rollern 12 als Zugeinrichtung wird das sich auf dem Zinnbad 7 ausbildende Glasband 13 in seiner Ausbreitungsbewegung von der Seite her in seiner weiteren Bewegung definiert beeinflusst. In den Figuren 1 und 2 sind lediglich jeweils zwei Top-Roller beispielhaft dargestellt, jedoch können je nach Bedarf auch mehr als zwei dieser Top-Roller vorhanden sein und verwendet werden.

Nach seiner Heißformung kann das Glasband 13 gegebenenfalls in einen Kühlofen 14 überführt werden, welcher ebenfalls über Brenner 15 verfügen kann, um das Glasband einer definierten Temperaturabsenkung zu unterziehen.

Nach Verlassen des Kühlofens 14 steht das Glasband 13 dann zu einer weiteren Verarbeitung, insbesondere Vereinzelung in Glasscheiben oder Glassubstrate zur Verfügung.

Um bei der nachfolgenden Beschreibung von Ausführungsformen räumliche Anordnungen verschiedener Baugruppen oder von Eigenschaften, beispielsweise von heißzuformenden Gläsern oder Dünnglassubstraten klarer darstellen zu können, wird zunächst auf das in Figur 3 dargestellte kartesische Koordinatensystem verwiesen, welches eine orthogonale X-, Y- und Z-Richtung definiert, auf die sich nachfolgend alle Angaben bei den verschiedenen Figuren weiter beziehen.

Die X- und Y-Richtung spannt eine Ebene auf, welche sich horizontal erstreck und damit auch im Wesentlichen parallel zur Oberfläche des Zinnbads 7 verläuft. Senkrecht zu dieser Ebene verlaufend erstreckt sich die Z-Richtung nach oben und definiert hiermit auch die Normalenrichtung in Bezug auf das Glasband 13.

Nachfolgend wird auf Figur 1 Bezug genommen, welche als Vorrichtung zur Herstellung eines Dünnglassubstrats, insbesondere eines Dünnglassubstrats mit verminderten Ziehstreifen, die insgesamt mit dem Bezugszeichen 1' versehende Floatanlage umfasst, welche über sämtliche mit Bezug auf Figur 2 beschriebenen Einrichtungen verfügt.

Als Einrichtung zum Schmelzen 16, ist hierbei die Schmelzwanne oder der Einschmelzofen 2', eine Zuführungseinrichtung für das Glasgemenge 3 und sind die Brenner 4 umfasst. Ferner weist die Schmelzwanne 2' einen Kanal 6' zur Überführung des geschmolzenen, heißzuformenden Glases 8 auf das Zinnbad 7' auf.

Beispielhaft ist hinter dem Kanal 6' der Regelschieber 17, somit das Bauteil zur Durchsatzregulierung des Glasstroms, welches auch als Tweel bezeichnet wird, angeordnet. Durch Verschiebung des Regelschiebers oder Tweels 17 in Richtung des neben dem Bezugszeichen 17 dargestellten Doppelpfeils kann der Querschnitt des Kanals 6 verengt oder vergrößert werden, wodurch die Menge des pro Zeiteinheit des aus der Schmelzwanne 2' austretenden geschmolzenen und heißzuformenden Glases 8 geregelt und insbesondere definiert eingestellt werden. Ferner kann zwischen der Schmelzwanne 2' und dem Floatbadofen 9, insbesondere vor dem Tweel 17 eine Speiserinne angeordnet sein, welche in diesem Fall den Kanal 6, insbesondere auch über eine längere als in Figur 1 dargestellte Strecke ausbildet. Eine detailliertere Beschreibung der Durchsatzregulierung findet sich in der DE 10 2013 203 624 A1 der gleichen Anmelderin, welche durch Bezugnahme auch zum Gegenstand der vorliegenden Anmeldung gemacht wird.

In Strömungsrichtung des geschmolzenen und heißzuformenden Glases 8 gesehen ist eine Einrichtung 18 zur definierten Einstellung der Viskosität des geschmolzenen und heißzuformenden Glases 8 vor dem Tweel 17 und vor dem Spout 11 angeordnet.

Bei bevorzugten Ausführungsformen kann die Einrichtung 18 zur definierten Einstellung der Viskosität auch unmittelbar vor dem Spout angeordnet sein.

Diese Einrichtung 18 zur definierten Einstellung der Viskosität umfasst eine Kammer 19, welche von der Schmelzwanne 2' abgetrennt ist oder auch einen Teil von dieser bilden kann und das geschmolzenen zu einem Dünnglassubstrat zu formenden Glas 8 zur definierten Einstellung seiner Viskosität aufnimmt.

Ferner umfasst die Einrichtung 18 zur definierten Einstellung der Viskosität fluiddurchströmte Bereiche 20, 21, insbesondere von Wasser durchströmte Bereiche, welche Wärme von dem heißzuformenden Glas 8 aufnehmen und als metallisches Rohrsystem ausgebildet sein können. Dieses metallische Rohrsystem kann auch zur besseren Wärmeaufnahme eingefärbt oder mit einer temperaturfesten Farbe auf dessen Oberfläche versehen sein.

Alternativ oder zusätzlich können auch die Wände 22, 23, 24 und 25 der Kammer 19 Wärme von dem heißzuformenden Glas 8 aufnehmen, indem deren Temperatur, beispielsweise durch weitere Kühleinrichtungen definiert eingestellt wird.

Die Kammer 19 kann mit deren Wänden 22, 23, 24 und 25 auch räumlich getrennt von der Schmelzwanne 2' ausgebildet sein und über hochtemperaturfeste metallische Wände verfügen, um eine verbesserte Wärmeableitung zur Verfügung zu stellen, wie dies nachfolgend noch unter Bezugnahme auf Figur 3 detaillierter beschrieben wird.

Wenn die Einrichtung 18 zur definierten Einstellung der Viskosität und somit die Kammer 19 mit deren Wänden 22, 23, 24 und 25 räumlich getrennt von der Schmelzwanne 2' ausgebildet ist, und folglich nicht mehr einen Teil der Schmelzwanne 2' bildet, beziehen sich für diese Ausführungsformen sämtliche Angaben zur Viskosität und Temperatur, welche bevorzugt für das Kanal-Ende der Schmelzwanne und vor dem Tweel getroffen werden, nur noch auf den Ort unmittelbar vor dem Tweel und umfassen dabei nicht mehr das dann räumlich von diesem Ort getrennte Ende des Kanals der Schmelzwanne.

Wie vorstehend beschrieben umfasst die Einrichtung 18 zur definierten Einstellung der Viskosität zumindest eine Kühleinrichtung, mittels welcher die Temperatur und somit auch die Viskosität des heißzuformenden Glases 8 definiert einstellbar ist. Hiermit ist die Viskosität des Glases 8 jeweils mit einer maximalen Abweichung $\Delta \lg \eta$ / dPas = 0,1 an einem Ort unmittelbar vor Tweel, $\Delta \lg \eta$ / dPas = 0,2 bei einer Entfernung von 1,5 m zu dem Ort unmittelbar hinter Tweel und $\Delta \lg \eta$ / dPas = 0,3 /dPas bei einer Entfernung von 12 m zu dem Ort unmittelbar hinter Tweel einstellbar.

Die Einrichtung 18 zur definierten Einstellung der Viskosität umfasst ferner eine sensorische Einheit 26, welche die Temperatur des heißzuformenden Glases 8, insbesondere mit einer maximalen Abweichung von 10 °C erfasst, und somit auch die Viskosität des heißzuformenden Glases erfasst, insbesondere mit einer maximalen Abweichung von $\Delta \lg \eta$ / dPas = 0,1 an einem Ort unmittelbar vor Tweel, $\Delta \lg \eta$ / dPas = 0,2 bei einer Entfernung von 1,5 m zu dem Ort unmittelbar hinter Tweel und $\Delta \lg \eta$ / dPas = 0,3 /dPas bei einer Entfernung von 12 m zu dem Ort unmittelbar hinter Tweel erfasst.

Viskositätsmessungen sind einem Fachmann auf vorliegendem technischen Gebiet hinlänglich bekannt.

Eine Viskositätsmessung oder Ermittlung der Viskosität $\eta$ kann jedoch auch durch eine Messung der Temperatur T des jeweiligen Glases am jeweils angegebenen Ort und eine entsprechende nachfolgende Umrechnung der Temperatur T in Viskositätswerte $\eta$ vorgenommen werden.

Dann kann für das jeweilige Glas dessen Temperatur-Viskositätskurve für eine Umrechnung der Temperaturwerte T in Viskositätswerte $\eta$ verwendet werden. Diese Temperatur-Viskositätskurve kann vorab ermittelt werden, indem für jede zu messende Temperatur T des jeweiligen Glases dessen Viskosität $\eta$ auf herkömmliche Weise gemessen wird.

Hierfür kann aber insbesondere auch die dem Fachmann bekannte Vogel-Fulcher-Tammann-Gleichung $\lg \eta$ = A+B/(T-To), vorliegend mit Angabe der Temperaturen in °C, für das jeweilige Glas verwendet werden.

Hierzu können die entsprechenden Koeffizienten To, A und B für das jeweilige Glas zunächst experimentell ermittelt und dann zur Bestimmung der Viskosität $\eta$ verwendet werden. Der Wert der gemessenen Temperatur T definiert dann den entsprechend gemessenen und mit dieser Gleichung umgerechneten Wert der Viskosität $\eta$.

Berührungsfreie sowie alternativ oder zusätzlich direkte Temperaturmessungen in Berührung mit dem zu messenden Glas sind dem Fachmann bekannt. Entsprechende Sensoren sind beispielsweise mit der sensorischen Einrichtung oder Einheit 26 im Rahmen dieser Offenbarung beschrieben.

Die sensorische Einrichtung oder Einheit 26 kann sich in direktem Glaskontakt befinden und somit eine direkte Temperaturmessung vornehmen oder auch eine Strahlungsmesseinrichtung umfassen, welche durch Erfassung des vom heißzuformenden Glases 8 emittierten Spektrums anhand des Spektrums selbst und/oder der Intensität der abgegebenen Strahlung die Temperatur erfasst. Die sensorische Einrichtung 26 kann an einem Ort, unmittelbar vor dem Tweel 17 angeordnet sein, und dabei in direkter Nähe zu dessen in Strömungsrichtung vorderer Seite oder wie dieses beispielhaft auch der Figur 1 zu entnehmen ist auch in geringem Abstand zum Tweel 17 angeordnet sein. Statt nur einer sensorischen Einheit 26 können auch weitere sensorische Einheiten an weiteren Orten, insbesondere an weiteren, in Strömungsrichtung beabstandeten Orten angeordnet sein, beispielsweise kann eine weitere sensorische Einheit auch am Anfang des Bays 1 somit in einer Entfernung in Ziehrichtung von bis zu 1,5 m nach dem Tweel und auch am Anfang des Bays 4 somit in einer Entfernung in Ziehrichtung von bis zu 12 m nach dem Tweel angeordnet sein, ohne dass dieses um der Klarheit der Darstellung Willen eigenständig in Figur 1 nochmals dargestellt wurde.

Die Vorrichtung 1' zur Herstellung eines Dünnglassubstrats, insbesondere eines Dünnglassubstrats mit verminderten Ziehstreifen, umfasst eine Einrichtung 47 zur Heißformung, welche nachfolgend auch unter Bezugnahme auf Figur 3 detaillierter beschrieben wird, die sich in Strömungs- oder Ziehrichtung hinter der Einrichtung 18 zur definierten Einstellung der Viskosität befindet und über den Spout 11 das heißzuformende Glas 8 aufnimmt.

Der Spout 8 leitet das heißzuformende Glas 8 auf ein Zinnbad 7', welches im Floatbadofen 9' aufgenommen ist. Am Boden des Floatbadofens 9' befinden sich Querstege 27 bis 31, welche das Zinnbad in mehrere Bays 32 bis 37 unterteilen. Floatbäder werden in der Regel in 7 oder 8 Bays unterteilt, wohingegen in Figur 1 beispielhaft nur sechs hintereinanderliegende Bays, dies sind Bay 1 bis Bay 6 mit den Bezugszeichen 32 bis 37, dargestellt sind. Es wird zur weiteren Beschreibung auch auf DE 10 2006 051 637 A1 verwiesen, in welcher Floatbäder mit entsprechenden Bays offenbart sind.

Oberhalb des sich auf dem Zinnbad 7' ausbildenden Glasbands 13 sind, wie auch gut aus Figur 3 zu erkennen ist, weitere Top-Roller 38 bis 44 neben dem Top-Roller 12' zur mechanischen Bewegung des Glasbands 13 angeordnet.

Bis zum Anfang des Bays 1, welcher das Bezugszeichen 32 aufweist, beträgt die Entfernung vom Ende des Tweels 17 in Zieh- oder Strömungsrichtung 1,5 m und bis zum Anfang des Bays 4, welcher das Bezugszeichen 35 aufweist, beträgt die Entfernung vom Ende des Tweels 17 in Zieh- oder Strömungsrichtung 12 m, wie dieses auch der in X-Richtung skalierten Darstellung des kartesischen Koordinatensystems der Figur 3 zu entnehmen ist.

Figur 3 ist weiterhin eine alternative oder zusätzliche Ausgestaltung der Einrichtung 18 zur definierten Einstellung der Viskosität zu entnehmen. Das geschmolzene Glas 8 befindet sich in einem Kanal 6' der von der in Figur 3 nicht dargestellten Schmelzwanne 2' zum Floatbadofen 9' führt. Die Wände 45, 46 des Kanals 6' sind aus einem hochtemperaturfesten Metall, beispielsweise Platin gebildet, welches auch als metallische Schicht auf einem mineralischem feuerfesten Material angeordnet sein kann. Durch die definierte Einstellung der Temperatur der Wände 45, 46 kann dem Glas 8 Wärme entzogen und auch dessen Temperatur sowie Viskosität definiert eingestellt werden. Auch bei dieser Ausführungsform kann die vorstehend beschriebene sensorische Einheit 26 vorzugsweise in der Nähe des Tweels 17 angeordnet sein.

Vorstehend wurde für die Einrichtung 47 zur Heißformung eine Zieheinrichtung beschrieben, welche eine Floateinrichtung, insbesondere einen Floatbadofen 9' mit einem Zinnbad 7' umfasst.

In weiterer Ausgestaltung kann die Erfindung jedoch auch eine Down-Draw-Zieheinrichtung, insbesondere eine Overflow-Down-Draw-Fusion-Zieheinrichtung umfassen, welche in den Figuren nicht dargestellt ist und das Verfahren nicht nur ein Floatverfahren, sondern auch ein Dow-Draw-Verfahren, insbesondere ein Overflow-Fusion-Down-Draw-Verfahren umfassen.

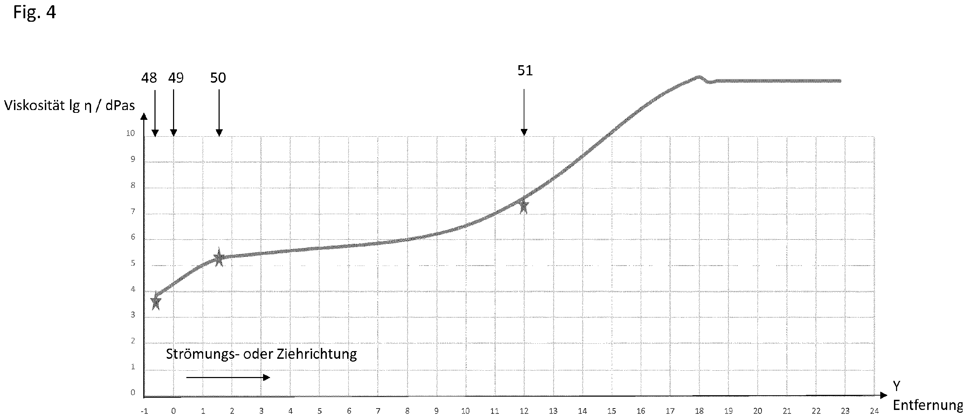

Nachfolgend wird auf Figur 4 Bezug genommen, welche den Verlauf der Viskosität des auf dem Floatbad 7' befindlichen Glases 8 oder Glasbands 13 in Strömungs- oder Ziehrichtung entlang der Mittellinie M zeigt, welche auch als Y-Richtung des kartesischen Koordinatensystems angegeben ist, und hierbei die jeweilige Viskosität $\eta$ des Glases 8 oder Glasbands 13 als Funktion des Ortes in Y-Richtung angibt.

In Figur 4 ist ein Pfeil 48 bei einem Ort in Y-Richtung vor dem Tweel 17 und vor dem Spout 11 angegeben. Dieser Ort in Y-Richtung liegt bei bevorzugten Ausführungsformen unmittelbar vor dem Tweel, somit direkt vor dessen in Strömungsrichtung gesehen vorderem Ende. Soweit im Rahmen dieser Offenbarung Aussagen zu "vor dem Tweel" , insbesondere zu Viskositäten oder Temperaturen gemacht werden, beziehen sich diese Aussagen bei bevorzugten Ausführungsformen auf diesen Ort vor dem Tweel. Soweit im Rahmen dieser Offenbarung Aussagen zu "vor dem Spout", insbesondere zu Viskositäten oder Temperaturen gemacht werden, beziehen sich diese Aussagen bei den bevorzugten Ausführungsformen auf einen Ort in Strömungsrichtung unmittelbar vor dem Spout.

Der Pfeil 49 befindet sich in Y-Richtung bei dem Ort, welcher in Strömungs- oder Ziehrichtung dem hinteren Ende des Tweels 17 entspricht, und somit auch den Ort unmittelbar hinter dem Tweel 17 bezeichnet, welcher den hier offenbarten Abstands- und Entfernungsangaben zugrunde liegt. Der Pfeil 50 liegt in Y-Richtung bei einer Entfernung von 1,5 m zu diesem hinteren Ende des Tweels 17 und damit an einem Ort, welcher in Strömungs- oder Ziehrichtung bei einer bevorzugten Ausführungsform dem Anfang des Bays 1 entspricht. Der Pfeil 51 liegt in Y-Richtung bei einer Entfernung von 12 m zum hinteren Ende des Tweels, welches in Strömungs- oder Ziehrichtung bei dieser bevorzugten Ausführungsform dem Anfang des Bays 4 entspricht.

Mit den vorstehen beschriebenen Vorrichtungen und Einrichtungen kann ein erfindungsgemäßes Verfahren zur Herstellung eines Dünnglassubstrats, vorzugsweise zur kontinuierlichen Herstellung eines Dünnglassubstrats, insbesondere eines Dünnglassubstrats mit verminderten Ziehstreifen, durchgeführt werden.

Bei diesem Verfahren wird nach dem Schmelzen und vor der Heißformung die Viskosität $\eta$ des zu formenden, insbesondere heißzuformenden Glases 8 oder zumindest teilweise geformten Glases 13 für das zu erhaltende Dünnglassubstrat definiert eingestellt.

Diese definierte Einstellung der Viskosität $\eta$ wird vor Abgabe an eine Einrichtung zur Heißformung 47, insbesondere vor der Abgabe an einen Floatbadofen 9' durchgeführt, wobei insbesondere eine definierte Abkühlung des heißzuformenden Glases 8 mittels der Einrichtung 18 durchgeführt wird.

Eine Einstellung der Viskosität $\eta$ wird vor dem Lippenstein oder der Einlauflippe für die Abgabe des flüssigen Glases, dem Spout 11, vorgenommen und erfolgt insbesondere vor der Abgabe auf ein Metallbad, das Zinnbad 7' des Floatbadofens 9' .

Eine Einstellung der Viskosität kann auch vor dem Regelschieber, somit dem Bauteil zur Durchsatzregulierung des Glasstroms, dem Tweel 17 vorgenommen werden.

Die Viskosität des zu formenden Glases beträgt dabei am Kanal-Ende der Schmelzwanne 2' somit am Ende des Kanals 6'und vor dem Tweel 17 mindestens lg $\eta$ /dPas = 3,75.

Am Anfang des Bays 1 somit in einer Entfernung in Ziehrichtung von bis zu 1,5 m nach dem Tweel 17 kann die Viskosität bei einer bevorzugten Ausführungsform mindestens lg $\eta$ /dPas = 5,25 betragen und/oder am Anfang des Bays 4 somit in einer Entfernung in Ziehrichtung von bis zu 12 m nach dem Tweel mindestens lg $\eta$ /dPas = 7,05 betragen.

Hierbei kann die Temperatur des zu formenden oder zumindest teilweise geformten Glases bei dem Glas, für welches die nachfolgenden Messungen der Ziehstreifen oder langgestreckten Erhebungen an der Oberfläche und dessen Dicke beschrieben werden, vor dem Tweel mindestens 1000 °C und höchstens 1100 °C und/oder am Anfang des Bays 1 somit in einer Entfernung in Ziehrichtung von bis zu 1,5 m mindestens 850 °C und höchstens 910 °C und/oder am Anfang des Bays 4 somit in einer Entfernung in Ziehrichtung von bis zu 12 m nach dem Tweel mindestens 720°C und höchstens 760 °C beträgt. Hierbei lag jeweils eine maximale Temperaturabweichung von höchstens 10 °C vor

Bei einer besonders bevorzugten Ausführungsform gilt für die Viskosität $\eta_1$ für eine erste Strecke für eine Entfernung bis zu 1,5 m nach dem Tweel die nachfolgende Gleichung, bei welcher $y_1$ jeweils die Entfernung oder den Abstand zu dem Ort unmittelbar hinter dem Tweel bezeichnet und somit am Ort unmittelbar hinter dem Tweel den Wert

Null annimmt:

$$\lg \eta_1(y_1)\ /\mathrm{dPas} = (\lg \eta_{01}\ /\mathrm{dPas} + a_1(y_1))$$

mit

$$0\ \mathrm{m} \leq y_1 \leq 1,5\ \mathrm{m}$$

$$3,75 \leq \lg \eta_{01}\ /\mathrm{dPas} \leq 4,5$$

$$a_1(y_1) = 1,00\ /\mathrm{m} * y_1.$$

Bei dieser bevorzugten Ausführungsform wies die Änderung der Viskosität im Bereich von $0\ \mathrm{m} \leq y_1 \leq 1{,}5\ \mathrm{m}$ pro Längeneinheit von einem Meter einen Wert auf, welcher besonders bevorzugt $\Delta \lg \eta\ /\ \mathrm{dPas}\ /\ \Delta\ y = 0{,}666\ /\mathrm{m}$ +/- 0,1 /m betrug, jedoch größer als 0,334 /m und kleiner als 0,8 /m war, wobei $\Delta \lg \eta\ /\ \mathrm{dPas}$ bei dieser Gleichung die Änderung der Viskosität auf dem Abstandsbereich $\Delta$ y bezeichnet.

Bei einer weiteren bevorzugten Ausführungsform gilt für die Viskosität $\eta_2$ für eine zweite Strecke mit einer Entfernung von 12 m nach dem Tweel bis zu einer Entfernung von 16 m nach dem Tweel für die Viskosität $\eta_2$ die nachfolgende Gleichung, bei welcher $y_2$ jeweils die Entfernung zu dem Ort unmittelbar hinter dem Tweel bezeichnet:

$$\lg \eta_2(y_2)\ /\mathrm{dPas} = (\lg \eta_{02}\ /\mathrm{dPas} + a_2(y_2))$$

mit

$$12\ \mathrm{m} \leq y_2 \leq 16\ \mathrm{m}$$

$$7,05 \leq \lg \eta_{02}\ /\mathrm{dPas} \leq 7,6$$

$$a_2(y_2) = 0,788\ /\mathrm{m} * (y_2 - 12\ \mathrm{m}).$$

Sämtliche Entfernungsangaben sind im Rahmen dieser Offenbarung, soweit diese Viskositäten und insbesondere die Viskosität $\eta$, $\eta_1$, $\eta_2$, oder die Temperatur des Glases betreffen jeweils beginnend von dem Ort unmittelbar hinter dem Tweel oder Regelschieber angegeben und sind jeweils in Zieh- oder Strömungsrichtung, somit in Y-Richtung angegeben. Dieser Ort unmittelbar nach dem oder hinter dem Tweel entspricht bei Ausführungsformen von Schmelzwannen, welche über einen Tweel verfügen, der in Strömungsrichtung gesehenen Hinterseite des Tweels 17.

Bei einer ersten Ausführungsform, bei welcher die Einrichtung 18 zur definierten Einstellung der Viskosität einen Teil der Schmelzwanne bildet, liegt das Ende des Kanals 6'der Schmelzwanne 2' unmittelbar vor dem Tweel.

Die Angaben für die jeweiligen Viskositäten gelten im Rahmen dieser Offenbarung jeweils zumindest für die Mitte des Glases 8 oder Glasbands 13, jeweils gesehen in X- und in Z-Richtung. Eine entsprechende Mittellinie M, welche in X-Richtung in der Mitte des Glases 8 oder Glasbands 13 verläuft, ist beispielhaft in Figur 3 dargestellt.

Besonders gut konnten die vorstehend beschriebenen Viskositäten in Anlagen zur Heißformung eines Dünnglassubstrats bei einem Durchsatz von weniger als 400 t, bevorzugt 200 t, besonders bevorzugt 100 t Glas pro Tag verwirklicht werden.

Nach der Heißformung des Dünnglassubstrats bei einem Durchsatz von weniger als 400 t pro Tag, bevorzugt 200 t pro Tag, besonders bevorzugt 100 t Glas pro Tag betrug pro Tag der Anteil des Gutglases mehr als 15 % des gesamten Glasdurchsatzes. Als Gutglas wird hierbei ein Glassubstrat verstanden, bei welchem die maximale Höhe H der hier beschriebenen Erhebungen oder somit die maximale Höhe H der Ziehstreifen im Mittel bei arithmetischer Mittelung, bereinigt von keilförmigen Dickenschwankungen und Verwölbungen einer Analysefläche von $10 * 10\ \mathrm{cm}^2$, vorzugsweise in der Mitte eines heißgeformten Glasbands senkrecht zur Ziehrichtung, weniger als 100 nm betrug und bei welchen die Quererstreckung der Erhebung jeweils kleiner als 40 mm ist.

Als bereinigt von keilförmigen Dickenschwankungen und Verwölbungen gelten im Rahmen dieser Offenbarung Messwerte der Dicke und der Höhe, wenn der Einfluss der keilförmigen Dickenänderung K sowie der Verwölbung V auf einen Wert von weniger als 5 % reduziert ist.

Generell wurde das Glas aus Schmelze, insbesondere das Glas, welches nachfolgend bei den Messungen der Oberfläche und der Dicke des Dünnglassubstrats angegeben ist und aus der Schmelzwanne 2' in die Einrichtung 18 zur definierten Einstellung der Viskosität eintrat, in der Einrichtung 18 mit einer ersten Temperatur von beispielsweise 1500 °C aufgenommen und für den Eintritt in die Heißformgebung auf eine zweite Temperatur von beispielsweise 1050°C, abgekühlt und mit dieser Temperatur dann in die Einrichtung 47 zur Heißformung überführt.

Die Abkühlung betrug dabei jedoch mindestens 250 °C, bevorzugt 300 °C, besonders bevorzugt 450 °C und auch eine Abkühlung von 500 °C war mit der Einrichtung 18 möglich.

Ausführungsformen bevorzugter Gläser

Bei dem erfindungsgemäßen Verfahren können, insbesondere in der hier beschriebenen Vorrichtung, vorteilhaft die nachfolgend aufgeführten Gläser verwendet werden:

1. Borosilicatgläser
2. Aluminosilicatgläser
3. Lithiumaluminosilicatgläser

Bei den hier offenbarten Zusammensetzungen sind alle angegebenen Werte, sowohl in der Beschreibung als auch in den Ansprüchen jeweils in Gew.-% angegeben, soweit nicht abweichend hiervon für die jeweilige Zusammensetzung anderes angegeben wird.

Hierbei versteht der Fachmann insbesondere als Borosilicatgläser Gläser, die folgende Komponenten enthalten (in Gew.-%):

| | |
|---|---|
| $SiO_2$ | 70 - 87 |
| $B_2O_3$ | 7 - 25 |
| $Na_2O + K_2O$ | 0,5 - 9 |
| $Al_2O_3$ | 0 - 7 |
| CaO | 0 - 3. |

Ein erstes bevorzugtes Borosilicatglas hat die nachfolgende Zusammensetzung und umfasst:

| | |
|---|---|
| $SiO_2$ | 70-86 Gew.-% |
| $Al_2O_3$ | 0-5 Gew.-% |
| $B_2O_3$ | 9,0-25 Gew.-% |
| $Na_2O$ | 0,5-5,0 Gew.-% |
| $K_2O$ | 0-1,0 Gew.-% |
| $Li_2O$ | 0-1,0 Gew.-%, |

Ein zweites bevorzugtes Borosilicatglas ist ein Alkaliborosilicatglas mit guten thermischen Vorspanneigenschaften. Es enthält

| | |
|---|---|
| $SiO_2$ | 78,3-81,0 Gew.-% |
| $B_2O_3$ | 9,0-13,0 Gew.-% |
| $Al_2O_3$ | 3,5-5,3 Gew.-% |
| $Na_2O$ | 3,5-6,5 Gew.-% |
| $K_2O$ | 0,3-2,0 Gew.-% |
| CaO | 0,0-2,0 Gew.-% |

2. Aluminosilicatgläser können bevorzugt die nachfolgende Zusammensetzung in Gew.-% aufweisen:

| | |
|---|---|
| $SiO_2$ | 55 bis 65 |
| $Na_2O$ | mehr als 12 bis 17 |

(fortgesetzt)

| | |
|---|---|
| $Al_2O_3$ | 16,5 bis 20 |
| $K_2O$ | 2 bis 4,4 |
| MgO | 3,9 bis 10 |
| $ZrO_2$ | 0 bis 5 |
| ZnO | 0 bis 4 |
| CaO | 0 bis 4 |
| $Na_2O + K_2O + MgO + ZnO + CaO$ | 15 bis 28 |
| $SnO_2$ | 0 bis 1 |
| $TiO_2 + CeO_2$ | weniger oder gleich 1. |

3. Lithiumaluminosilicatgläser können eine Zusammensetzung aufweisen, die die nachfolgenden Komponenten enthält (in Gew.-%) :

| | |
|---|---|
| $SiO_2$ | 60 bis 75 |
| $Al_2O_3$ | 10 bis 28 und |
| $Li_2O$ | 3 bis 15. |

Vorteilhaft kann auch ein Lithium-Aluminosilicatglas verwendet werden, umfassend
- eine Zusammensetzung in mol-% aus:

| | |
|---|---|
| 60-70 | $SiO_2$ |
| 10-13 | $Al_2O_3$ |
| 0,0-0,9 | $B_2O_3$ |
| 9,5-15 | $Li_2O$ |
| 8,2-<12 | $Na_2O$ |
| 0,0-0,7 | $K_2O$ |
| 0,0-0,2 | MgO |
| 0,2-2,3 | CaO |
| 0,0-0,4 | ZnO |
| 1,3-2,6 | $ZrO_2$ |
| 0,0-0,5 | $P_2O_5$ |
| 0 - 0,1 | $Fe_2O_3$, bevorzugt 0,0003-0,100 $Fe_2O_3$ |
| 0,0-0,3 | $SnO_2$ |
| 0 - 0,2 | $CeO_2$, bevorzugt 0,0004-0,200 $CeO_2$ |

wobei vorzugsweise

- das Lithium-Aluminosilicatglas einen E-Modul von zumindest 80 GPa aufweist,
- eine Glasübergangstemperatur $T_g$ von kleiner als 540°C und/oder eine Verarbeitungstemperatur von kleiner als 1150°C aufweist,
- für eine Formgebung mittels eines Floatprozesses geeignet ist und,
- chemisch und/oder thermisch vorspannbar ist, so dass es eine Biegebruchfestigkeit, gemessen mit der Doppelringmethode nach EN 1288-5, von zumindest 550 N/mm$^2$ aufweist.

Gemäß einer bevorzugten Ausführungsform der Erfindung umfasst, beispielsweise bei einem Verbundglas, insbesondere für ein Kraftfahrzeug, die zweite Scheibe, ein mit dem erfindungsgemäßen Verfahren heißgeformtes Dünnglassubstrat mit einem Lithium-Aluminium-Silicatglas mit einem $Li_2O$-Gehalt von 4,6 Gew.-% bis 5,4 Gew.-% und einem $Na_2O$-Gehalt von 8,1 Gew.-% bis 9,7 Gew.-% und einem $Al_2O_3$-Gehalt von 16 Gew.-% bis 20 Gew.-%.

Gemäß einer weiteren Ausführungsform der Erfindung umfasst, beispielsweise die erste Scheibe bei einem Verbundglas, insbesondere für ein Kraftfahrzeug, ein Lithium-Aluminium-Silicatglas mit einem $Li_2O$-Gehalt von 4,6 Gew.-% bis 5,4 Gew.-% und einem $Na_2O$-Gehalt von 8,1 Gew.-% bis 9,7 Gew.-% und einem $Al_2O_3$-Gehalt von 16 Gew.-% bis 20 Gew.-%.

Gemäß einer weiteren Ausführungsform der Erfindung umfasst die zweite, als Dünnglassubstrat vorliegende Scheibe bei dem Verbundglas folgende Bestandteile:

58 bis 65 Gew.-% $SiO_2$
16 bis 20 Gew.-% $Al_2O_3$
0,1 bis 1 Gew.-% $B_2O_3$
4,6 bis 5,4 Gew.-% $Li_2O$
8,1 bis 9,7 Gew.-% $Na_2O$
Gegebenenfalls 0,05 bis 1,0 Gew.-% $K_2O$
0,2 bis 2,0 Gew.-% CaO
2,5 bis 5,0 Gew.-% $ZrO_2$

Dabei können gegebenenfalls ein oder mehrere der Bestandteile $SnO_2$, $CeO_2$, $P_2O_5$ und ZnO zu einem Anteil von insgesamt 0 Gew.-% bis 2,5 Gew.-% umfasst sein.

Ein weiterer bevorzugter Zusammensetzungsbereich für ein Dünnglassubstrat, insbesondere die zweite Scheibe umfasst:

60 bis 62 Gew.-% $SiO_2$
17,5 bis 19,5 Gew.-% $Al_2O_3$
0,5 bis 0,7 Gew.-% $B_2O_3$
4,8 bis 5,2 Gew.-% $Li_2O$
8,5 bis 9,5 Gew.-% $Na_2O$
0,2 bis 0,5 Gew.-% $K_2O$
0,5 bis 1,2 Gew.-% CaO
3,2 bis 3,8 Gew.-% $ZrO_2$

Gegebenenfalls können ein oder mehrere der Bestandteile $SnO_2$, $CeO_2$, $P_2O_5$ und ZnO zu einem Anteil von insgesamt 0,25 Gew.-% bis 1,6 Gew.-% umfasst sein.

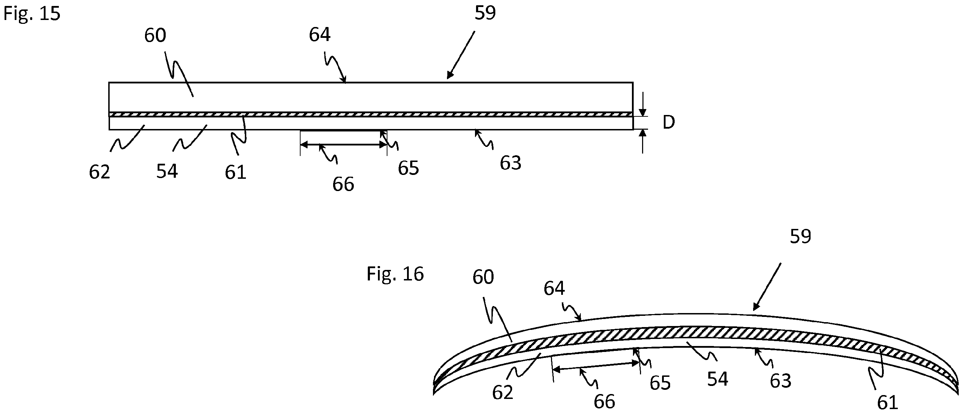

Figur 15 zeigt schematisch und nicht maßstabsgetreu eine Verbundglasscheibe 59, welche eine erste Scheibe 60 umfasst, eine polymerisch ausgebildete Lage 61, welche zwischen der ersten Scheibe 60 und der zweiten Scheibe 62 angeordnet ist und diese verbindet, sowie schließlich die zweite Scheibe 62.

Allgemein, ohne Beschränkung auf das hier abgebildete Ausführungsbeispiel ist es jedoch auch möglich, dass die Verbundglasscheibe mehr als zwei Scheiben umfasst. Beispielhaft kann dies der Fall sein, wenn besonders hohe mechanische Belastungen erwartet werden und entsprechend eine besonders hohe Festigkeit der Verbundglasscheibe angestrebt sind.

Die polymerisch ausgebildete Lage 61 hat eine Dicke zwischen mindestens 0,5 mm und höchstens 1,7 mm. Sie kann als Folie, beispielsweise als Folie umfassend EVA und/oder Polyvinylbutyral, oder als Lage, welche mehrere Folien umfasst, beziehungsweise als mehrlagige Folie, ausgebildet sein. Es ist aber auch möglich, dass die polymerisch ausgebildete Lage durch Aufbringen von Monomeren auf eine der beiden Scheiben 60, 62 sowie durch Starten einer Polymerisierungsreaktion die polymerisch ausgebildete Lage in situ zu bilden. Auch ist es allgemein möglich, dass die polymerische Lage 61 aus einem Verbund von Folien gebildet ist. Insbesondere können die Folien auch PET und/oder PE umfassen. Bei einer mehrlagigen Folie können die Lagen unterschiedliche Zusammensetzungen und physikalische Eigenschaften aufweisen. Allgemein kann die Folie oder eine Lage einer mehrlagigen Folie eine Low-E bzw. eine sogenannte Solar-Control- Beschichtung aufweisen.

Weiterhin ist in der abgebildeten Ausführungsform die erste Scheibe 60 dicker ausgebildet als die zweite Scheibe 62. Dies ist beispielsweise dann von Vorteil, wenn die erste Scheibe eine geringere intrinsische Festigkeit aufweist als die Scheibe 62, sodass zur Gewährleistung einer insgesamt ausreichenden Festigkeit der Verbundglasscheibe 59 die Dicke der ersten Scheibe 2 entsprechend erhöht wird.

Die zweite Scheibe 64 weist bevorzugt eine Dicke zwischen mindestens 0,3 mm und höchstens 1,5 mm auf und kann das hier beschriebene Dünnglassubstrat 54 umfassen oder aus diesem bestehen. Lediglich beispielhaft ist nur in Figur 15 die Dicke des Dünnglassubstrats 54 mit dem Bezugszeichen D, jedoch dabei auch als Offenbarung für alle weiteren hier beschriebenen Ausführungsformen des Dünnglassubstrats 54 angegeben.

Die Gläser der ersten und der zweiten Scheibe 59, 62 sind bevorzugt so aufeinander abgestimmt, dass sich die Temperaturen, bei welchen die beiden Gläser der ersten und der zweiten Scheibe im Viskositätsbereich zwischen 107 dPas und 1010 dPas die gleiche Viskosität aufweisen, voneinander nur um maximal 50°C, bevorzugt um maximal 30°C, besonders bevorzugt um maximal 20°C und ganz besonders bevorzugt um maximal 10°C voneinander unterscheiden.

Bevorzugt liegt die zweite Scheibe 62 als chemisch vorgespannte Scheibe vor, bevorzugt als chemisch vorgespannte Scheibe mit einer Druckspannungszone von mindestens 40 μm Dicke, wobei die Druckspannung mindestens 150 MPa und maximal 900 MPa beträgt.

Gemäß einer weiteren Ausführungsform der Erfindung beträgt die Druckspannung maximal 800 MPa, bevorzugt maximal 600 MPa. Eine solche Druckspannung wird insbesondere durch ein Vorspannen mittels eines Natriumnitrat-Kaliumnitrat-Gemischs erhalten.

Gemäß einer weiteren Ausführungsform der Erfindung beträgt die Druckspannung maximal 500 MPa, bevorzugt maximal 400 MPa, besonders bevorzugt maximal 300 MPa und ganz besonders bevorzugt maximal 250 MPa. Solche Druckspannungen sind insbesondere durch ein Vorspannen mittels einer reinen Natriumnitratschmelze zu erzielen.

Gemäß einer in Figur 16 dargestellten Ausführungsform der Erfindung liegt die Verbundglasscheibe 1 als gebogene Verbundglasscheibe, insbesondere als Kraftfahrzeugscheibe vor, sodass die nach außen weisende Seite der zweiten Scheibe 62 konkav gewölbt ist. Bei dieser Formung zur Erzeugung der Wölbung kann das erfindungsgemäß hergestellte Dünnglassubstrat der zweiten Scheibe 62 geringfügigen Dickenänderungen der Dicke D unterliegen.

Sowohl die in Figur 15 als auch die in Figur 16 dargestellte Verbundglasscheibe 59 kann, insbesondere bei Verwendung als Kraftfahrzeugscheibe, eine Reflexionsfläche 65 für ein Head-up-Display ausbilden, insbesondere, wenn diese in einem Head-up-Display für auf dem Land, auf oder im Wasser sowie in der Luft betriebene Fahrzeuge, insbesondere motorbetriebene Fahrzeuge verwendet wird. Bei einer solchen Verwendung der Verbundglasscheibe 59 kann die erste Scheibe 60 der Außenseite des Fahrzeugs und die zweite Scheibe 62 der Innenseite des Fahrzeugs zugewandt sein. Hierbei kann die Reflexionsfläche 65 für ein Head-up-Display auf der dann in den Innenraum des Fahrzeugs weisenden Oberfläche 63 der zweiten Scheibe 62 liegen. Hierbei kann sich die Reflexionsfläche 65 über die gesamte Oberfläche 63 erstrecken oder auch nur über einen Teilbereich der Oberfläche 63 erstrecken, welcher mit einem Doppelpfeil 66 beispielhaft in den Figuren 15 und 16 dargestellt ist. Head-up-Displays sind dem Fachmann wohlbekannt und bedürfen folglich keiner weiteren detaillierteren Darstellung.

Gemäß einer weiteren Ausführungsform der Erfindung weist die zweite Scheibe 62 einen Zebrawinkel von größer oder gleich 45° auf, insbesondere von größer oder gleich 50°, besonders bevorzugt von größer oder gleich 55°, bei einer Dicke von 0,7 mm. Bezüglich des Zebrawinkels und der nachfolgend erwähnten Ring-on-Biegefestigkeit wird auf die prioritätsbegründende Anmeldung DE 10 2016 125 488 verwiesen, welche durch Inkorporierung auch zum Gegenstand der vorliegenden Anmeldung gemacht wird.

Gemäß einer weiteren Ausführungsform der Erfindung weist die zweite Scheibe 62 eine Ring-on-Ring-Biegefestigkeit von mehr als 150 MPa, insbesondere mehr als 250 MPa, bevorzugt mehr als 300 MPa, weiterhin bevorzugt mehr als 400 MPa, besonders bevorzugt mehr als 500 MPa und ganz besonders bevorzugt mehr als 600 MPa und weniger als 900 MPa auf.

Weiterhin ist die Verbundglasscheibe 1 gemäß einer weiteren Ausführungsform so ausgebildet, dass die zweite Scheibe 4 bei einer Dicke von 0,7 mm und einer Wellenlänge von 840 nm eine Transmission von mehr als 91,5 %, bei einer Wellenlänge von 560 nm von mehr als 91,5 % und bei 380 nm von mehr als 90 % aufweist. Dies ist, wie bereits weiter oben genannt, besonders vorteilhaft für die Realisierung einer guten Durchsicht durch die Scheibe 1, sodass auf diese Weise die Fahrgastsicherheit weiter verbessert wird.

Bevorzugt ist die Verbundglasscheibe 59 so ausgestaltet, dass die Temperaturen, bei welchen die Gläser der ersten Scheibe 60 und der zweiten Scheibe 62 im Viskositätsbereich zwischen 107 dPas und 1010 dPas die gleichen Viskositätswerte aufweisen, sich bei jeweils gleicher Viskosität voneinander nur um maximal 50°C, bevorzugt um maximal 30°C, besonders bevorzugt um maximal 20°C und ganz besonders bevorzugt um maximal 10°C voneinander unterscheiden.

Gemäß einer nochmals weiteren Ausführungsform der Erfindung liegt die zweite Scheibe 62 im Wesentlichen durch den Austausch von Lithium-Ionen gegen Natrium-Ionen chemisch vorgespannt vor. Als "im Wesentlichen durch den Austausch von Lithium-Ionen gegen Natrium-Ionen vorgespannt" wird eine Scheibe dann bezeichnet, wenn der wesentlichen Anteil der Vorspannung, also mindestens 80% der erzeugten Vorspannung, auf den Austausch von Lithium-Ionen gegen Natrium-Ionen zurückzuführen ist. Insbesondere ist eine Scheibe dann als im Wesentlichen durch den Austausch von Lithium-Ionen gegen Natrium-Ionen vorgespannt, wenn die Vorspannung ausschließlich durch diesen Austausch erhalten wird.

Fig. 16 zeigt die Ausführungsform einer Verbundglasscheibe 59, welche insbesondere eine Kraftfahrzeugscheibe sein kann. Hierbei ist wiederum eine erste Scheibe 60, eine polymerisch ausgebildete Lage 61 sowie eine zweite Scheibe 62 von der Verbundglasscheibe 59 umfasst. Allerdings ist diesmal die Verbundglasscheibe 59 gewölbt ausgebildet. Dabei ist es möglich, dass sich, wie abgebildet, die Dicke der einzelnen Scheiben 60, 62, sowie die der polymerisch ausgebildeten Lage 61 von der Mitte der Verbundglasscheibe 59 hin zu den Rändern verjüngt. Allerdings ist es auch möglich, dass die Dicke der einzelnen Scheiben 60, 62 sowie auch der polymerisch ausgebildeten Lage 61 jeweils konstant ist oder dass nur einzelne der die Verbundglasscheibe 59 aufbauenden Lagen 60, 61, 62 eine über den Querschnitt der Scheibe 59 variierende Dicke aufweisen. Beispielsweise können eine oder mehrere der Lagen keilförmig ausgebildet vorliegen.

Vorliegend ist die Verbundglasscheibe 59 so ausgebildet, dass die nach außen weisende Oberfläche 63 der zweiten Scheibe 62 konkav gewölbt ist.

Allgemein, ohne Beschränkung auf das hier abgebildete Beispiel, kann die Verbundglasscheibe 59 auch so ausgebildet sein, dass die nach außen weisende Oberfläche 64 der ersten Scheibe 60 konkav gewölbt ist.

Ein nochmals weiterer bevorzugter Zusammensetzungsbereich für ein Dünnglassubstrat, insbesondere die zweite Scheibe eines Verbundglases umfasst:

61 bis 62 Gew.-% $SiO_2$
17,5 bis 18,5 Gew.-% $Al_2O_3$
0,5 bis 0,7 Gew.-% $B_2O_3$
4,9 bis 5,1 Gew.-% $Li_2O$
8,8 bis 9,3 Gew.-% $Na_2O$
0,2 bis 0,5 Gew.-% $K_2O$
0,5 bis 1,2 Gew.-% $CaO$
3,2 bis 3,8 Gew.-% $ZrO_2$

Gegebenenfalls können dabei ein oder mehrere der Bestandteile $SnO_2$, $CeO_2$, $P_2O_5$ und ZnO zu einem Anteil von insgesamt 0,5 Gew.-% bis 1,0 Gew.-% umfasst sein.

Gemäß einer weiteren bevorzugten Ausführungsform der Erfindung umfasst das Dünnglassubstrat, insbesondere die zweite Scheibe eines Verbundglases die folgende Zusammensetzung in mol-%:

| | |
|---|---|
| 60 bis 70 | $SiO_2$ |
| 10 bis 13 | $Al_2O_3$ |
| 0,0 bis 0,9 | $B_2O_3$ |
| 9,6 bis 11,6 | $Li_2O$ |
| 8,2 bis kleiner 10 | $Na_2O$ |
| 0,0 bis 0,7 | $K_2O$ |
| 0,0 bis 0,2 | $MgO$ |
| 0,2 bis 2,3 | $CaO$ |
| 0,0 bis 0,4 | $ZnO$ |
| 1,3 bis 2,6 | $ZrO_2$ |
| 0,0 bis 0,5 | $P_2O_5$ |
| 0,003 bis 0,100 | $Fe_2O_3$ |
| 0,0 bis 0,3 | $SnO_2$ |
| 0,004 bis 0,200 | $CeO_2$. |

Bevorzugt gelten dabei folgende Verhältnisse für die Zusammensetzung des Lithium-Aluminium-Silicatglases:

$$(Li_2O + Al_2O_3) / (Na_2O + K_2O) > 2,$$

$$0,47 < Li_2O / (Li_2O + Na_2O + K_2O) < 0,7$$

$$0,8 < CaO + Fe_2O_3 + ZnO + P_2O_5 + B_2O_3 + CeO_2 < 3,$$

wobei zumindest vier aus den sechs Oxiden von der Glaszusammensetzung umfasst sind.

Weiterhin bevorzugt umfasst dabei das Lithium-Aluminium-Silicatglas eine Glasübergangstemperatur $T_g$ von kleiner als 540°C und/oder eine Verarbeitungstemperatur von weniger als 1150°C.

Die bei dem erfindungsgemäßen Verfahren erhaltenen Dünnglassubstrate wurden in ihren Abmessungen in z-Richtung sowie in ihren optischen Eigenschaften nach dem Vermessen analysiert und berechnet und dabei die Verminderung der Ziehstreifen gegenüber herkömmlichen Verfahren festgestellt.

Es wurden dabei bei einer ersten Messreihe Messungen beider Hauptoberflächen zur Bestimmung von Dickenabweichungen von einem ideal planen Dünnglassubstrat als Dickenmessungen des Dünnglassubstrats und wurden bei einer zweiten Messreihe Messungen der Erhebungen oder Ziehstreifen auf der oberen Hauptoberfläche des Dünnglassubstrats 54 vorgenommen.

Die Daten der ersten Messreihe erfassen somit die optische Wirkung eines Dünnglassubstrats, bei welchem das Licht durch die obere und untere Hauptoberfläche hindurchtritt und beschreiben diese Wirkung auch anhand der hierdurch entstehenden optischen Brechkräfte, welche durch beide Oberflächen gebildet werden. Hierdurch können Beeinflussungen beispielsweise von optischen Strahlengängen für hinter dem Dünnglassubstrat 54 angeordnete sensorische Einrichtungen beschrieben werden, welche beispielsweise der sensorischen Erfassung des Umfelds eines Kraftfahrzeugs dienen.

Die Daten der zweiten Messreihe erfassen die optischen Wirkungen nur einer Hauptoberfläche, wie diese beispielsweise bei in Durchlicht verwendeten Dünnglassubstraten 54 auftreten, wenn diese beispielsweise auf einer Seite plan geschliffen und poliert sind oder auf einer Seite in einen Werkstoff mit gleichem Brechungsindex, beispielsweise in einer Verbundglasscheibe eingebettet sind.

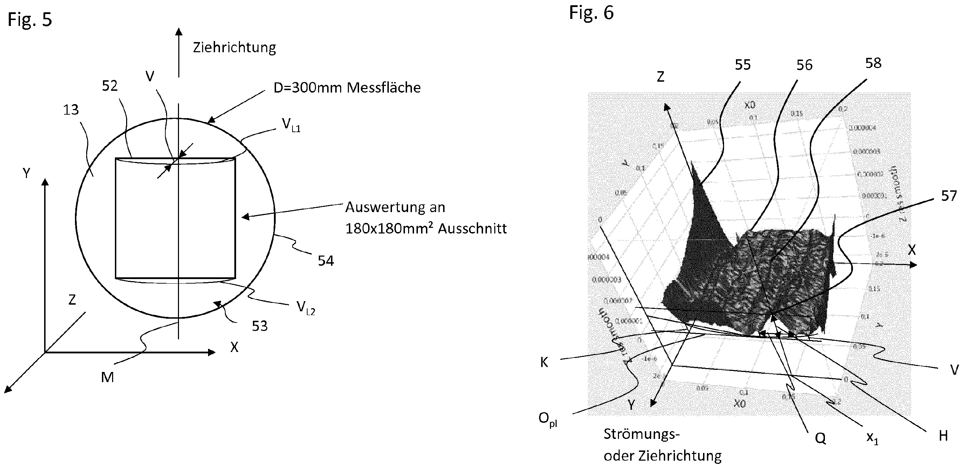

Hierzu wird nachfolgend zur Erläuterung der ersten Messreihe, somit den Messungen beider Hauptoberflächen zur Bestimmung von Dickenabweichungen von einem ideal planen Dünnglassubstrat zunächst auf Figur 5 Bezug genommen. Diese zeigt eine schematische Darstellung eines Messfeldes zur Messung der optischen Weglänge zwischen der oberen Hauptoberfläche und der unteren Hauptoberfläche und somit von Abmessungen in Z-Richtung. Mittels eines Laserinterferometers, insbesondere mittels eines Phase-Shift-Interferometers, wurden Messungen durchgeführt welches sich über die gesamte obere Hauptoberfläche 53 des Dünnglassubstrates 54 erstreckten.

Als Hauptoberfläche eines Dünnglas- oder Glassubstrats werden in üblicher Weise die beiden sich gegenüberliegenden Seiten des Substrats bezeichnet, welche jeweils die größte flächige Erstreckung aufweisen.

Ferner ist ein Analysefeld 52 dargestellt, in welchem die nachfolgend beschriebenen Auswertungen vorgenommen wurden, deren Ergebnisse in Tabelle 1 angegeben sind. In dem Analysefeld 52 sind beispielhaft auch Konturlinien $V_{L1}$ und $V_{L2}$ dargestellt, welche eine Verwölbung V gegenüber einem ideal planen Dünnglassubstrat 54 lediglich schematisch andeuten und um der Klarheit Willen stark überhöht wiedergeben. Derartige Verwölbungen V erheben sich in typischer Weise in positiver oder negativer Z-Richtung bezogen auf die Hauptebenen eines ideal planen Dünnglassubstrats 54 und können in Zieh- oder Y-Richtung symmetrisch, insbesondere symmetrisch zu der Mittellinie M ausgebildet sein und sich mit deren Längsrichtung in Zieh- oder Y-Richtung erstrecken. Obwohl wegen der nachfolgenden messtechnischen Erläuterungen die Konturlinien $V_{L1}$ und $V_{L2}$ beispielhaft nur für das Analysefeld 52 dargestellt sind, können sich derartige Verwölbungen auch über das gesamte Dünnglassubstrat 54 erstrecken. Hierbei gibt der Wert der Verwölbung V den maximalen Abstand eines Punktes auf einer Hauptoberfläche des verwölbten Dünnglassubstrats relativ zu einem entsprechenden Punkt auf der Hauptoberfläche eines ideal planen Dünnglassubstrat ab.

Das Dünnglassubstrat wurde vor der jeweiligen Messung der Dickenabweichung nach Durchführung des erfindungsgemäßen Verfahrens aus dem Glasband 13 in Form eines rechteckförmigen Substrats vereinzelt. Die Messungen der Dickenabweichung wurden in der in Figur 5 dargestellten Form auf einer kreisförmigen Messfläche mit einem Durchmesser von 300 mm der Messung unterzogen.

Zum Vergleich wurde ein herkömmliches Dünnglassubstrat ebenfalls aus einem Glasband in gleicher Weise vereinzelt und der nachfolgenden Messung sowie Auswertung unterzogen. Dabei wurde darauf geachtet, dass sämtliche gemessenen Dünnglassubstrate aus der Mitte des Glasbands, senkrecht zur Ziehrichtung, somit aus der Mitte des Glasbands 13 in x-Richtung, dem Glasband nach Heißformung entnommen wurden.

Hierbei wurden Messungen an der Hauptoberfläche 53 in Z-Richtung des kartesischen Koordinatensystems vorgenommen und lag das Dünnglassubstrat 54 jeweils mit dessen Hauptoberflächen parallel zur X-Y-Ebene auf einer planen Unterlage auf, wie dieses auch für sämtliche weiteren hier offenbarten Messungen der Fall war.

Es wurden Messungen der Dickenabweichung von einem ideal planen Glassubstrat vorgenommen, welche in Tabelle 1 auch als Dickenschwankung $D_m$ /m bezeichnet sind, und dabei Messungen der Erhebung der beiden Hauptoberfläche in z-Richtung durch Messung des optischen Weglängenunterschieds zwischen der oberen und unteren Hauptoberfläche bezüglich eines ideal planen Glassubstrats vorgenommen.

Diese Messung der durch die Dicke der Erhebungen beider Seiten gebildeten Dickenabweichungen von einem ideal planen Substrat, somit Dickenschwankungen oder auch varikose Dickenschwankungen einer ersten Messreihe wurde mittels eines Laserinterferometer (phase shift interferometer) der Firma ZYGO vorgenommen.

Es handelte sich bei dem Laserinterferometer um ein Fizeau-Interferometer mit einer Apertur von 300 mm. Es wurde dabei ein Zygo Verifire system mit einem Messfleck von 30" (circular) eingesetzt.

Es wurde im QPSI™ rapid mechanical phase-shifting Modus gemessen und es betrug die Kameraeinstellung 1024x1024, welches jeweils 1024 Messpunkten in X- und in X-Richtungen entsprach.

Die Messunsicherheit in Z-Richtung war <30 nm, entsprechend Lambda/20 bei einer Wellenlänge von 633 nm.

Die seitliche Unsicherheit in X- und in Y-Richtung betrug 0,31 mm.

Piston Zernike Removal war aktiviert und Daten wurden lediglich zur Unterdrückung des Einflusses einer keilförmigen Dickenänderung K sowie einer Verwölbung V sowie unter Verwendung der Zygo Mx Software (Version 7.0.0.15) mit einem Gaussian Spline Filter Hochpass mit einem Cutoff von 40mm verwendet. Der Spline Beaton Coefficient und die Spline Tension Controls waren auf Default Settings eingestellt.

Der Einfluss der keilförmigen Dickenänderung K sowie der Verwölbung V konnte mit der vorstehend beschriebenen Filterung in Bezug auf das Messergebnis der Messung der jeweiligen Dickenschwankung $D_m$ /m auf einen Wert von weniger als 5 % reduziert werden. Hierdurch konnte die Messung der Dickenschwankung $D_m$ /m am jeweiligen Ort der Messung bereinigt werden von keilförmigen Dickenschwankungen und Verwölbungen.

Zum besseren Verständnis, wie derartige Dicken- oder auch Oberflächenmessungen in optische Brechkräfte umgesetzt werden können, werden die nachfolgenden Erläuterungen gegeben.

Die optische Brechkraft P(x,y) einer Oberfläche eines Glases, insbesondere eines Dünnglassubstrats, mit Erhebungen in z-Richtung mit der Höhe H ergibt sich dann, wenn man diese entlang einer in x-Richtung verlaufenden Geraden jeweils bei einem festen Wert von y bestimmt:

$$P(x) = (n-1)\,\kappa(x) = (n-1)\frac{z''(x)}{(1 + z'(x)^2)^{3/2}}$$

wobei

n den Brechungsindex des gemessenen Dünnglassubstrats darstellt und jeweils bei dem gemessenen Dünnglassubstrat einen Wert von 1,525 aufwies,

$z'(x)$ und $z''(x)$ die erste und zweite Ableitung der Höhe z(x) in x-Richtung darstellen und

z(x) die Höhe H in z-Richtung am Ort x ist.

Es gilt ferner für die gesamte Brechkraft beider Hauptoberflächen des Dünnglassubstrats 54:

$$P_{gesamt}(x) = P_{top}(x) + P_{bottom}(x)$$

wobei

$P_{gesamt}$ (x)   die gesamte Brechkraft beider Hauptoberflächen des Dünnglassubstrats am Ort x ist
$P_{top}(x)$   die Brechkraft der oberen Hauptoberflächen des Dünnglassubstrats am Ort x ist und
$P_{bottom}(x)$   die Brechkraft der unteren Hauptoberflächen des Dünnglassubstrats am Ort x ist.

Es konnten mit dem verwendeten Verfahren der Dickenmessung $P_{gesamt}(x)$ am Ort y und mittels des nachfolgend beschriebenen Verfahrens der zweiten Messreihe mittels FourierInterferometrie sowohl die obere Hauptoberfläche 53 als Werte $z_{top}(x)$ als auch die untere Hauptoberfläche mit Werten $z_{bottom}(x)$ des Dünnglassubstrats am Ort y 54 gemessen, deren Brechkräfte $P_{top}(x)$ und $P_{bottom}(x)$ bestimmt werden und daraus die gesamte Brechkraft $P_{gesamt}(x)$ des Dünnglassubstrats 54 angegeben oder auch nur die Brechkraft $P_{top}(x)$ oder $P_{bottom}(x)$ von nur einer der beiden Hauptoberflächen des Dünnglassubstrats 54 angegeben werden.

Der Einfluss der Dicke des als ansonsten, somit bis auf die Erhebungen ideal plan angenommenen Dünnglassubstrats 54, konnte jeweils vernachlässigt werden, insbesondere auch weil die optische Weglänge innerhalb des Dünnglassubstrats nur vernachlässigbaren Einfluss auf die optischen Brechkräfte hatte.

Als Dickenschwankung des Dünnglassubstrats, welche auch als varikose Änderung bezeichnet wird, ergeben sich aus diesen Messungen damit jeweils am Ort y, an welchem der jeweilige linienförmige Messscan in X-Richtung durchgeführt wurde bei Messung der zweiten nachfolgend beschriebenen Messreihe:

$$\mathrm{D(x) \;=\; z}_{bottom}\mathrm{(x) \;-\; z}_{top}\mathrm{(x) \;-\; D}_{\mathrm{Glas}}\mathrm{(x)\,.}$$

Wobei

$z_{bottom}(x)$   die Entfernung zur unteren Hauptoberfläche des Dünnglassubstrats am Ort x
$z_{top}(x)$   die Entfernung zur oberen Hauptoberfläche des Dünnglassubstrats am Ort x und
$D_{\mathrm{Glas}}$   die Dicke des als ideal planparallel unterstellten Dünnglassubstrats am Ort x war.

Aufgrund der der hier beschriebenen Filterung der gemessenen Dünnglassubstrate aus der Mitte des Glasbands konnte der Einfluss einer keilförmigen Dickenänderung K und Verwölbung V vermindert und auf diese Weise von diesem Einfluss bereinigt werden.

Diese so aus den Messwerten ermittelten Werte für $P_{top}(x)$, $P_{bottom}(x)$ gemessen mittels Fourierinterferometrie der nachfolgend beschriebenen zweiten Messreihe und $P_{gesamt}(x)$ gemessen mittels des Weißlichtinterferometers, insbesondere des Zygo-Weißlichtinterferometers der ersten Messreihe, stellen erheblich präzisere Angaben für die optische Leistung eines Dünnglassubstrats, insbesondere für die erzielbare Auflösung und den zu erhaltenen Kontrast innerhalb eines optischen Systems dar, als dies herkömmliche Schattenwurfverfahren leisten konnten.

Dies gilt insbesondere dann, wenn die erfindungsgemäß hergestellten Dünnglassubstrate Teil einer Frontscheibenprojektions-einrichtung, insbesondere eines Head-up-Display, für auf dem Land, auf oder im Wasser sowie in der Luft betriebene Fahrzeuge, bilden oder wenn hinter diesen optische Sensoren zur Erfassung der Umgebung eines solchen Fahrzeugs angeordnet sind.

Es wurde bei diesen Messreihen jeweils ein Dünnglassubstrat 54 mit einem Glas mit der folgenden Zusammensetzung verwendet:

60 bis 62 Gew.-% $SiO_2$
17,5 bis 19,5 Gew.-% $Al_2O_3$
0,5 bis 0,7 Gew.-% $B_2O_3$
4,8 bis 5,2 Gew.-% $Li_2O$
8,5 bis 9,5 Gew.-% $Na_2O$
0,2 bis 0,5 Gew.-% $K_2O$
0,5 bis 1,2 Gew.-% CaO
3,2 bis 3,8 Gew.-% $ZrO_2$

Es konnten bei diesem Glas ein oder mehrere der Bestandteile $SnO_2$, $CeO_2$, $P_2O_5$ und ZnO zu einem Anteil von insgesamt 0,25 Gew.-% bis 1,6 Gew.-% umfasst sein.

Da die vorliegenden Messwerte in x-Richtung gemessen wurden und zur Erfassung der Werte in y-Richtung jeweils zeilenweise parallel in x-Richtung verlaufende, nebeneinanderliegende Werte der Messungen in x-Richtung aneinandergereiht wurden, ergaben sich dabei für jede Zeile eines y-Werts die zugehörigen x-Werte dieser Zeile.

Es konnte durch diese zeilenweise Abtastung mit der vorstehend beschriebenen Messung die gesamte Dickenabweichung des Dünnglassubstrats 54 sowohl in x- als auch in y-Richtung erfasst werden. Das quadratische Analysefeld 52 der Figur 5, welches für die nachfolgende Tabelle 1 ausgewertet wurde, wies dabei eine Größe von 18 * 18 cm$^2$ auf.

Es handelt sich hierbei um eine eindimensionale Näherung, die zu einem zweidimensionalen Bild der Hauptoberfläche 53 zusammengesetzt wurde. Diese Näherung ist jedoch gerechtfertigt, da Waviness und starke Krümmungen jeweils nur senkrecht zur Ziehrichtung und somit in X-Richtung auftraten und somit auch entsprechend erfasst werden konnten. Auch die Struktur der Erhebungen, somit der Ziehstreifen, welche sich mit deren Längsrichtung im Wesentlichen in Ziehrichtung, somit in Y-Richtung erstrecken, wie auch aus Figur 6 zu erkennen, ließ diese Näherung zu.

Um auch für herkömmliche Verfahren, bei welchen beispielsweise im Schattenwurf der Ablenkungswinkel parallelen Lichts gemessen wird, entsprechende Werte mit dem vorliegenden Verfahren, insbesondere dem Verfahren der zweiten Messreihe, bereitzustellen und diese Werte, beispielsweise in Bogenminuten zu berechnen kann dieser Ablenkungswinkel mit den hier vorliegenden gemessenen Werten wie folgt jeweils für eine der Hauptoberflächen des Dünnglassubstrats, beispielsweise mit dem hier offenbarten Verfahren der zweiten Messreiche mittels Fourierinterferometrie bestimmt werden. Der Ablenkungswinkel berechnet sich dann aus den vorliegenden Werten aus der nachfolgenden Formel in Bogenminuten zu:

$$\frac{ArcTan(z'(x))}{60}$$

Dieser Ablenkungswinkel entspricht im Wesentlichen den herkömmlichen Messverfahren und es kann folglich auch dieser Wert mit dem vorstehend beschriebenen Mess- und Analyseverfahren bereitgestellt werden.

In Figur 6 sind beispielhaft die bei der zweiten Messreihe mit dem Fouriertransformations-Weißlichtinterferometer, FRT-Interferometer, erhaltenen Messwerte für die obere Oberfläche somit die Hauptoberfläche 53 des vorstehend erwähnten Dünnglassubstrat 54 in willkürlichen Einheiten in einer perspektivischen Ansicht dargestellt.

Dieser Ansicht ist gut zu entnehmen, dass Erhebungen auf der Hauptoberfläche 53 des Dünnglassubstrats 54, insbesondere langgezogene Erhebungen ausgebildet wurden, welche sich im Wesentlichen in Normalenrichtung und somit in Z-Richtung erheben und sich mit deren Längserstreckung im Wesentlichen in Ziehrichtung und somit in Y-Richtung erstrecken. Bei diesen, auch als Ziehstreifen bezeichneten langgezogenen Erhebungen betrug die Längserstreckung in Y-Richtung jeweils mehr als das Zweifache, insbesondere mehr als das Dreifache, und in der Regel mehr als das Fünffache der Quererstreckung der jeweiligen Erhebung in X-Richtung. Diese auch als Ziehstreifen bezeichneten Erhebungen tragen in Figur 6 die Bezugszeichen 55 bis 58. Beispielhaft für die jeweilige Quererstreckung einer Erhebung ist die Quererstreckung Q der Erhebung 57 in x-Richtung mit einem Doppelpfeil Q dargestellt und bezeichnet die größte Erstreckung einer Erhebung senkrecht zu deren Längsrichtung somit quer zur Längsrichtung der Erhebung oder des Ziehstreifens, welcher durch diese Erhebung gebildet wird.

Beispielhaft ist auch für die Höhenmessung sämtlicher weiterer Punkte auf der Mess- oder Analysefläche 52 die mit einem Doppelpfeil dargestellte Höhe H des Ziehstreifens 57 oder der Erhebung 57 am Ort y = 0, x = $x_1$ mit einem Wert von z = H angegeben. Diese Höhe H entspricht der gemessenen Höhe $z_{top}$(x) am Ort y = 0 des kartesischen Koordinatensystems in Bezug auf eine ideal plane Oberfläche der Hauptoberfläche 53 des Dünnglassubstrats 54. Die ideal plane Oberfläche ist für die Orte y = 0 in X-Richtung als Bezugslinie $O_{pl}$ in Figur 6 dargestellt.

Ferner ist mit dem Bezugzeichen K eine keilförmige Dickenänderung und dem Bezugzeichen V eine Verwölbung gegenüber einer ideal planen Oberfläche dargestellt.

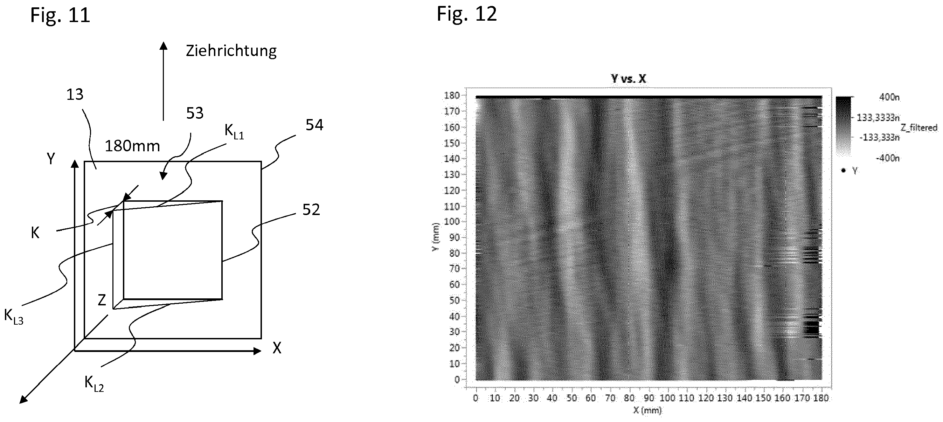

Diese Ziehstreifen bildenden Erhebungen wiesen, wie nachfolgend noch detaillierter für die zweite Messreihe beschrieben eine Höhe H in Z-Richtung auf, die bereinigt von keilförmigen Dickenschwankungen und Verwöbungen im Mittel bei arithmetischer Mittelung über die Analysefläche 52 der Figur 11 von 10 * 10 $cm^2$, vorzugsweise gemessen in der Mitte eines heißgeformten Glasbands senkrecht zur Ziehrichtung, und somit in X-Richtung in jedem gemessenen Fall kleiner als 100 nm waren.

Eine besonders bevorzugte Ausführungsform, des gemessenen Dünnglassubstrats 54, wies sogar eine Höhe H der Erhebungen in Z-Richtung auf, die im Mittel, bereinigt von keilförmigen Dickenschwankungen und Verwölbungen kleiner als 90 nm und sogar kleiner als 80 nm waren.

Zur Mittelung der Dickenabweichungen, welche auch als Dickenschwankung bezeichnet werden, wurde ebenfalls eine arithmetische Mittelung der wie vorstehend beschrieben gefilterten Messwerte über die gesamte Analysefläche 52 der Figur 5 von 18*18 $cm^2$ durchgeführt.

Es wurden mit dem vorstehend beschriebenen Verfahren der ersten Messreihe die nachfolgenden, in Tabelle 1 angegebenen Messwerte für die Dickenschwankungen oder Dickenabweichungen des Dünnglasubstrats 54 gewonnen.

## Tabelle 1

| 40mm Filter | $D_m$ /m | $(\Delta D/\Delta x)_m$ / (m/mm) | (Opt. Power)$_m$ /dpt |
|---|---|---|---|
| Dünnglas alt | 102E-09 | 44,1E-09 | 21,8E-03 |
| Dünnglas neu | 69,7E-09 | 24,2E-09 | 12,2E-03 |

In vorstehender Tabelle 1 sind die dezimalen Exponenten jeweils als Werte von E angegeben, wobei um der Kürze willen beispielsweise E-9 für den Faktor $*10^{-9}$ und E-3 für den Faktor $*10^{-3}$ verwendet wurde.

Als optische Brechkraft $P_{gesamt}$(x) wurde in der vorstehenden Tabelle dieser Begriff mit Opt. Power abgekürzt und somit dann die gesamte Brechkraft beider Hauptoberflächen des Dünnglassubstrats am Ort x angegeben.

In der vorstehenden Tabelle 1 sowie in der weiteren Beschreibung und in den Ansprüchen gibt ein tiefgestellter Index m jeweils an, dass der jeweilige damit bezeichnete Wert über das gesamte Analysefeld in X-Richtung arithmetisch gemittelt wurde.

Die in Tabelle 1 und 2 jeweils als Dünnglas alt bezeichnetet Werte wurden bei einem herkömmlichen Dünnglassubstrat gewonnen, welches die gleiche Glaszusammensetzung aufwies wie das erfindungsgemäß hergestellte Dünnglassubstrat, welches in Tabelle 1 und 2 als Dünnglas neu bezeichnet wurde.

Aus dieser Tabelle ist zu erkennen, dass die wie vorstehend beschrieben gefilterten und arithmetisch gemittelten Werte der Dicke der Erhebungen oder Ziehstreifen erheblich abgesunken sind. So wird beispielsweise in der Mitte des Glasbands (in X-Richtung und somit senkrecht zur Strömungsrichtung gesehen) 13 eine Abnahme von einem mittleren Wert von 102 * $10^{-9}$ m auf einen Wert von 69,7 *$10^{-9}$ m festgestellt.

Dieser Tabelle 1 sind auch deutlich verminderte arithmetisch gemittelte Steigungswerte $(\Delta D/\Delta x)_m$/(m/mm) zu entnehmen, welches mit der vorstehend angegebenen Gleichung für die Ablenkungswinkel auch zu deutlich verminderten gemittelten Ablenkungswinkeln führt. Gleiches gilt für die gemessenen und analysierten Werte der optischen Brechkräfte.

Es ergab sich aus diesen gemittelten Werten der wie vorstehend beschrieben gefilterten Messungen als 97,5 % Quantil, dass 97,5 % der Messpunkte eine varikose Dickenabweichung somit eine insgesamt Dickenabweichung beider Hauptoberflächen hatten bei dem mit dem erfindungsgemäßen Verfahren heißgeformten Dünnglassubstraten von weniger als 187,8 nm und bei dem herkömmlich heißgeformten Dünnglassubstrat von weniger als 282,4 nm.

Für $(\Delta D/\Delta x)_m$ ergab sich für die herkömmlichen Dünnglassubstrate für 97,5 % der Messpunkte ein Wert von weniger als 69,7 * $10^{-9}$ /(m/mm) und für die erfindungsgemäß hergestellten Dünnglasubstrate ein Wert von weniger als 42,3 * 10-9 m/mm.

Für die Brechkraft ergab sich für die herkömmlichen Dünnglassubstrate für 97,5 % der Messpunkte ein wie vorstehend beschrieben gefilterter, somit von Einflüssen der keilförmigen Dickenänderung K und der Verwölbung V bereinigter sowie gemittelter Wert von weniger als 282,4 mdpt und für die erfindungsgemäß hergestellten Dünnglassubstrate entsprechend ein Wert von weniger als 63,0 mdpt.

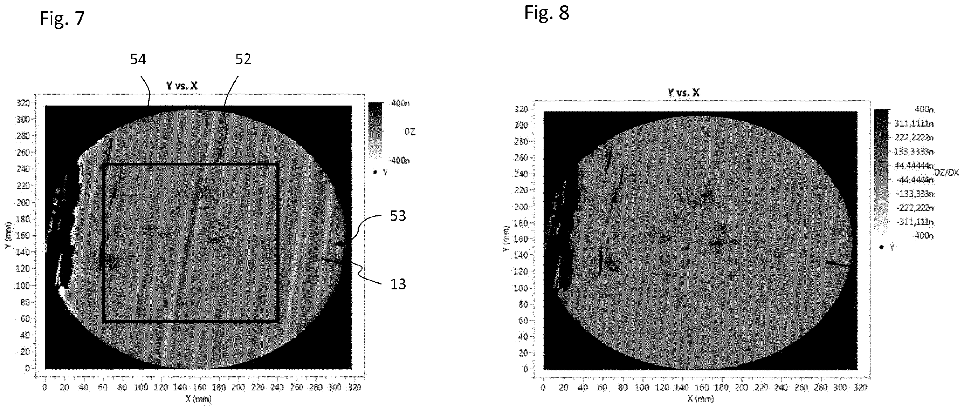

Die Figuren 7 bis 10 stellen zur Veranschaulichung weitere Ergebnisse in Form von Graustufenbildern dar und zeigen jeweils in Figur 7 eine Graustufendarstellung von mit dem Laserinterferometer erhaltenen Oberflächendaten des erfindungsgemäß hergestellten Dünnglassubstrates 54, bei welchen die Dickenwerte von Ziehstreifen als Grauwerte zu erkennen sind, in Figur 8 eine Graustufendarstellung der Ableitung in X-Richtung der mit dem Laserinterferometer erhaltenen Dickendaten und somit varikosen Oberflächendaten des Dünnglassubstrates 54, bei welchen die Ableitungswerte als Grauwerte zu erkennen sind.

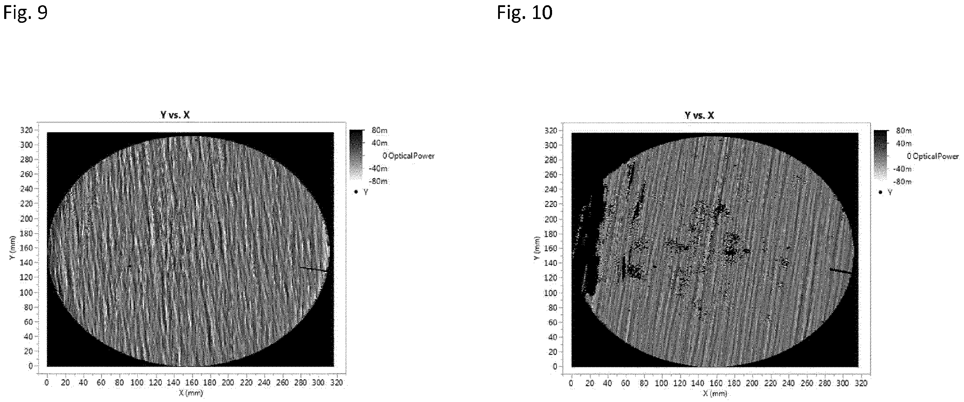

Figur 9 zeigt eine Graustufendarstellung optischer Brechkräfte der mit dem Laserinterferometer erhaltenen Oberflächendaten eines herkömmlichen Dünnglassubstrates, und Figur 10 eine Graustufendarstellung optischer Brechkräfte eines erfindungsgemäß hergestellten Substrats, bei welchen die Brechkräfte ebenfalls jeweils als Grauwerte zu erkennen sind.

Es ist deutlich zu erkennen, dass die optischen Brechkräfte des erfindungsgemäß hergestellten Dünnglassubstrats wesentlich geringer als die des herkömmlichen Dünnglassubstrats sind.

Die vorstehenden Werte wurden mit einem zweiten Messverfahren in einer zweiten Messreihe ergänzt, welches mittels eines Weißlichtinterferometers, insbesondere eines Fouriertransformations-Weißlichtinterferometers, FRT-Interferometers durchgeführt wurden, das nachfolgend unter Bezugnahme auf die Figuren 11 bis 14 beschrieben wird.

Figur 11 zeigt ähnlich zu Figur 5 eine schematische Darstellung eines Mess- oder Analysefelds 52, welches sich über die gesamte obere Hauptoberfläche des quadratischen Dünnglassubstrats 54 mit einer Größe von 18 * 18 cm$^2$ erstreckt.

Im Gegensatz zu der Darstellung aus Figur 5 wurde für das in Figur 11 dargestellte Messfeld 52 ein quadratisches Dünnglassubstrat mit den Abmessungen von 18 cm * 18 cm und einem Analysefeld von 10 cm * 10 cm verwendet. In dem Analysefeld 52 der Figur 11 sind beispielhaft auch Konturlinien $K_{L1}$, $K_{L2}$ und $K_{L3}$ dargestellt, welche eine im Wesentlichen keilförmige Dickenänderung K des Dünnglassubstrat 54 gegenüber einem ideal planen Dünnglassubstrat 54 lediglich schematisch angedeutet und um der Klarheit Willen stark überhöht wiedergeben. Derartige im Wesentlichen keilförmige Dickenänderungen K erheben sich in typischer Weise in positiver oder negativer Z-Richtung bezogen auf die Hauptebenen eines ideal planen Dünnglassubstrats 54 und erstrecken sich mit deren Längsrichtung in Zieh- oder Y-Richtung. Obwohl wegen der nachfolgenden messtechnischen Erläuterungen die Konturlinien $K_{L1}$, $K_{L2}$ und $K_{L2}$ beispielhaft nur für das Analysefeld 52 dargestellt sind, können sich derartige keilförmige Erhebungen auch über das gesamte Dünnglassubstrat 54 erstrecken. Hierbei gibt der Wert der keilförmigen Dickenänderung K den maximalen Abstand eines Punktes auf einer Hauptoberfläche des Dünnglassubstrats 54 mit keilförmiger Dickenänderung relativ zu einem entsprechenden Punkt auf der Hauptoberfläche eines ideal planen Dünnglassubstrat ab.

Für die Messung der herkömmlichen Dünnglassubstrate wurden sowohl bei der ersten als auch bei der zweiten Messreihe jeweils Dünnglassubstrate mit den gleichen Zusammensetzungen, somit den gleichen Gläsern und mit den gleichen Abmessungen wie für die erfindungsgemäß hergestellten heißgeformten Dünnglassubstrate verwendet.

Es wurde bei der zweiten Messreihe ein Fouriertransformations-Interferometer Microprof® (Art. MPR 200 30 mit Sensoren FRT CWL 600 um), hergestellt von Fries Research & Technology GmbH, Friedrich-Ebert-Str., D-51429 Bergisch Gladbach, verwendet.

Dabei lagen die folgenden Verhältnisse vor.

Die Messung wurde an quadratischen Flächen mit einer Fläche von 18* 18 cm$^2$ vorgenommen, jedoch für die hier angegebenen Messwerte nur innerhalb des Analysefelds 52 ausgewertet.

Es wurden 500 Scans, somit in Y-Richtung nebeneinander liegende zeilenweise Messungen, mit jeweils 500 Punkten und einem Punktabstand in X-Richtung von 0,36 mm vorgenommen. Der Versatz der Zeilen in Y-Richtung wies jeweils einen Abstand von 0,36 mm auf. Ausgewertet wurde beispielhaft nur die obere Fläche innerhalb des Analysefelds 52 eines 0,7 mm dicken Dünnglassubstrats, somit das Analysefeld 52 von dessen oberer Hauptoberfläche 53.

Die Scaneinheit (gantry design) wurde mit einer Geschwindigkeit von 15 mm/s als Messgeschwindigkeit betrieben, bei einer möglichen Maximalgeschwindigkeit von 300 mm/s). Die seitliche Auflösung betrug in X- und Y-Richtung < 2 μm und die Auflösung in vertikaler Richtung somit in Z-Richtung betrug 6 nm.

Der Messbereich erfasste in X- und Y-Richtung 180 x 180 mm mit 500 gemessenen Linien mit einem Abstand zwischen den gemessenen Linien von 360 μm.

Es wurden dabei 500 Messpunkte pro Linie erfasst und der Abstand zwischen den Messpunkten betrug jeweils 360 μm.

Die Messrichtung der einzelnen Scans entlang der jeweiligen Messlinie verlief jeweils senkrecht zur Ziehrichtung, somit in X-Richtung.

Der Abstand zwischen Sensor und der Messoberfläche betrug ungefähr 3.74 mm bei einer Dicke des jeweils

gemessenen Dünnglasubstrats von 0.7 mm.

Die erhaltenen Werte wurden zeilenweise geglättet, um hochfrequentes Rauschen zu unterdrücken.

Es wurde ein kubischer Spline mit einem Flexibility Parameter lambda = 5 verwendet sowie ein kubischer Spline mit einem Flexibility Parameter lambda = 10000, welches einem Hochpassfilter mit einer Länge von 40 mm entsprach, um jeweils den Einfluss von Verwölbungen V und keilförmigen Dickenänderungen K des Dünnglasubstrats zu unterdrücken. Es wurde hierzu das SAS JMP™ Programm verwendet.

Beide gefilterte Zeilen wurden voneinander abgezogen z(x, lambda=5) - z(x, lambda=10000), um einen Bandpassfilter zu ergeben, der im Wesentlichen nur noch die tatsächlich für die gemessenen Werte der Erhebungen z(x) befreit von Störungen der jeweiligen Messwerte bereitzustellen, welches einem Bandpassfilter mit 3dB Bandpass Länge von ca. 7-35 mm entsprach.

Der Einfluss der keilförmigen Dickenänderung K sowie der Verwölbung V konnte mit der vorstehend beschriebenen Filterung in Bezug auf das Messergebnis der Messung der jeweiligen Höhe H auf ein Wert von weniger als 5 % reduziert werden. Hierdurch konnte die Messung der Höhe am jeweiligen Ort der Messung bereinigt werden von keilförmigen Dickenschwankungen und Verwölbungen.

Das Analysefeld 52 mit den Abmessungen von 10 * 10 cm$^2$ wurde ebenfalls der jeweiligen arithmetischen Mittelung für die wie vorstehend beschrieben erhaltenen Daten der oberen Hauptoberfläche 53 zugrunde gelegt.

Figur zeigt 12 beispielhaft eine Graustufendarstellung von mit dem FRT-Interferometer erhaltenen Oberflächendaten eines erfindungsgemäß hergestellten Dünnglassubstrates 54, bei welchen die Dickenwerte von Ziehstreifen als Grauwerte zu erkennen sind.

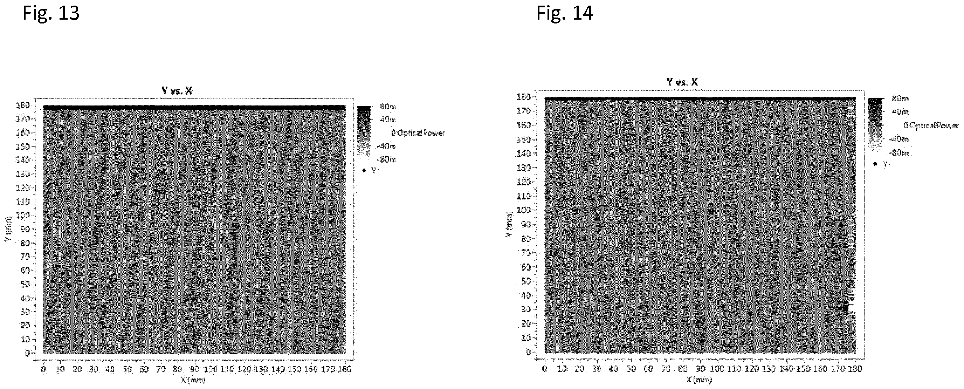

Ein Vergleich der herkömmlichen mit erfindungsgemäß hergestellten Dünnglassubstraten ist den Figuren 13 und 14 zu entnehmen, bei welchen Figur 13 eine Graustufendarstellung optischer Brechkräfte der mit dem FRT-Interferometer erhaltenen Oberflächendaten eines herkömmlichen Dünnglassubstrates und Figur 14 eine Graustufendarstellung optischer Brechkräfte der mit dem FRT-Interferometer erhaltenen Oberflächendaten der oberen Hauptoberfläche eines erfindungsgemäß hergestellten Dünnglassubstrates 54.

Hierbei wurden die nachfolgenden, in Tabelle 2 aufgeführten Ergebnisse im arithmetischen Mittel gemittelt über die Analysefläche 52 erhalten.

Tabelle 2

| Spline Filter 5-35mm | $Z_m$ /m | $(\Delta Z/\Delta x)_m$ / (m/mm) | (Opt. Power)$_{m, einseitig}$ /dpt | (Winkel)$_m$ /rad |
|---|---|---|---|---|
| Dünnglas alt | 108,6E-09 | 30,2E-09 | 8,1E-03 | 208E-03 |
| Dünnglas neu | 70,1E-09 | 20,8E-09 | 6,2E-03 | 142,9E-03 |

In dieser Tabelle bezeichnen:

$Z_m$: Das arithmetische Mittel der gefilterten, und somit von keilförmigen Dickenschwankungen und Verwölbungen bereinigten Werte der Höhe H der Erhebungen auf der Analysefläche 52, auf der oberen Hauptoberfläche 53 des Dünnglassubstrats 54 von $10 \times 10 \text{cm}^2$

$(\Delta Z/\Delta x)_m$: Das arithmetische Mittel der Ableitung senkrecht zur Ziehrichtung der Oberflächenwelligkeit der Ziehstreifen auf einer Analysefläche von $10 \times 10 \text{cm}^2$

(Opt. Power)$_{m,einseitig}$: Das arithmetische Mittel der errechneten optischen Brechkraft der oberen Hauptoberfläche 53 auf einer Mittelungsfläche von $10 \times 10 \text{cm}^2$

(Winkel)$_m$: Das arithmetische Mittel des errechneten Ablenkungswinkels bei senkrecht einfallendem Strahl auf die Hauptoberfläche 53 arithmetisch gemittelt über eine Analysefläche von $10 * 10 \text{cm}^2$.

Somit konnten mit dem hier beschriebenen Verfahren zur Herstellung eines Dünnglasubstrats Erhebungen auf einer der Hauptoberflächen des Dünnglasubstrats, insbesondere langgezogene Erhebungen, welche sich im Wesentlichen in Normalenrichtung erheben, ausgebildet werden, welche eine Längserstreckung größer als das Zweifache, bevorzugt Dreifache, besonders bevorzugt das Fünffache einer Quererstreckung der Erhebung aufweisen und eine Höhe H aufweisen, die im arithmetischen Mittel bei Mittelung einer Analysefläche von 10 * 10 cm$^2$, vorzugsweise in der Mitte eines heißgeformten Glasbands senkrecht zur Ziehrichtung, kleiner als 100 nm, bevorzugt kleiner als 90 nm, besonders bevorzugt kleiner als 80 nm waren und bei welchen die Quererstreckung der Erhebung jeweils kleiner als 40 mm waren.

Nicht nur die gemittelten Werte, sondern auch die Verteilung der absoluten Werte wurde durch das erfindungsgemäße Verfahren erheblich verbessert.

97,5 % der Messpunkte des erfindungsgemäß heißgeformten Dünnglassubstrats hatten eine Abweichung in Z-Richtung somit maximale Erhebung der Ziehstreifen von weniger als 173,9 nm und bei dem herkömmlich geformten Dünnglassubstrat waren es 273,5 nm.

Für 97,5% der Messpunkte betrug der Wert von $(\Delta D/\Delta x)_m$ /(m/mm) für das erfindungsgemäß heißgeformte Glas weniger als 57,1 und für das herkömmlich geformte Glas 78,3. Für 97,5% der Messpunkte betrug der Wert der Brechkraft einseitig für das herkömmlich geformte Dünnglassubstrat weniger als 22,3 mdpt und für das erfindungsgemäß heißgeformte Dünnglassubstrat weniger als 17,5 mdpt.

Mit dem Verfahren zur Herstellung eines Dünnglassubstrats wies durch die Heißformung das Dünnglassubstrat 54 im Wesentlichen eine keilförmige Dickenänderung K über eine Länge von 1 m senkrecht zur Ziehrichtung, somit in X-Richtung einen Wert von weniger als 100 μm auf. Ferner wies hierbei durch die Heißformung das Dünnglassubstrat 54 eine Verwölbung V über eine Länge von 1 m senkrecht zur Ziehrichtung, somit in X-Richtung einen Wert von weniger als 600 μm auf.

Bei der vorstehenden Beschreibung waren alle Mittelungen arithmetische Mittelungen, die innerhalb der jeweiligen Analysefläche 52 vorgenommen wurden, wobei bei der Dickenmessung, somit der Messung der varikosen Dickenabweichung eine Analyse- und Mittelungsfläche von 18 * 18 cm$^2$ und bei der Messung der Höhe H der Erhebungen allein auf der Hauptoberfläche 53, eine Analyse- oder Mittelungsfläche von 10 * 10 cm$^2$ verwendet wurde.

Mit dem vorstehend beschriebenen Verfahren konnte durch die Heißformung das Dünnglassubstrat 54 mit einer mittleren Dicke, gemittelt über eine Fläche der ersten und der zweiten Hauptoberfläche des Dünnglassubstrats 54 von mindestens 10 cm * 10 cm von 0,3 mm bis 2,6 mm erhalten werden.

Es waren aber auch weitere bevorzugte Ausführungsformen des Dünnglassubstrats 54 mit einer Dicke von 0,7 bis 2,5 mm zu erhalten, sowie besonders bevorzugte Ausführungsformen mit einer Dicke von etwa 0,7 mm oder einer Dicke von etwa 2,54 mm. Ferner konnten mit dem erfindungsgemäßen Verfahren sogar Glassubstrate mit einer Dicke von bis zu 10 mm oder sogar einer Dicke von bis zu 12 mm hergestellt werden.

Bezugszeichenliste

1 Anlage zur Herstellung von gefloatetem Glas, Floatanlage
1' Vorrichtung zur Herstellung eines Dünnglassubstrats, Floatanlage
2 Schmelzwanne oder Einschmelzofen
2' Schmelzwanne oder Einschmelzofen
3 Glasgemenge
4 Brenner
5 Glasschmelze
6 Kanal der Schmelzwanne
6' Kanal der Schmelzwanne
7 Floatbad, insbesondere Zinnbad
7' Floatbad, insbesondere Zinnbad
8 Geschmolzenes, heißzuformendes Glas
9 Floatbadofen
9' Floatbadofen
10 Brenner
11 Einlauflippe oder Spout
12 Top-Roller
12' Top-Roller
13 Glasband
14 Kühlofen
15 Brenner
16 Einrichtung zum Schmelzen
17 Regelschieber, Tweel
18 Einrichtung zur definierten Einstellung der Viskosität

| | |
|---|---|
| 19 | Kammer |
| 20 | Fluiddurchströmter Bereich |
| 21 | Fluiddurchströmter Bereich |
| 22 | Wand der Kammer 19 |
| 23 | Wand der Kammer 19 |
| 24 | Wand der Kammer 19 |
| 25 | Wand der Kammer 19 |
| 26 | Sensorische Einheit |
| 27 | Quersteg |
| 28 | Quersteg |
| 29 | Quersteg |
| 30 | Quersteg |
| 31 | Quersteg |
| 32 | Bay 1 |
| 33 | Bay 2 |
| 34 | Bay 3 |
| 35 | Bay 4 |
| 36 | Bay 5 |
| 37 | Bay 6 |
| 38 | Top-Roller |
| 39 | Top-Roller |
| 40 | Top-Roller |
| 41 | Top-Roller |
| 42 | Top-Roller |
| 43 | Top-Roller |
| 44 | Top-Roller |
| 45 | Wand des Kanals 6' |
| 46 | Wand des Kanals 6' |
| 47 | Einrichtung zur Heißformung |
| 48 | Pfeil bei einem Ort vor Tweel 17 und vor Spout 11 |
| 49 | Pfeil bei dem Ort, welcher in Strömungs- oder Ziehrichtung dem hinteren Ende des Tweels 17 und somit dem Ort unmittelbar hinter dem Tweel entspricht |
| 50 | Pfeil bei einer Entfernung von 1,5 m, welcher in Strömungs- oder Ziehrichtung dem Anfang des Bays 1 entspricht |
| 51 | Pfeil bei einer Entfernung von 12 m, welcher in Strömungs- oder Ziehrichtung dem Anfang des Bays 4 entspricht |
| 52 | Analysefeld |
| 53 | Obere Hauptoberfläche |
| 54 | Dünnglassubstrat |
| 55 | Ziehstreifen |
| 56 | Ziehstreifen |
| 57 | Ziehstreifen |
| 58 | Ziehstreifen |
| 59 | Verbundglasscheibe |
| 60 | Erste Scheibe |
| 61 | Polymerische Lage |
| 62 | Zweite Scheibe |
| 63 | nach außen weisende Oberfläche der zweiten Scheibe 62 |
| 64 | nach außen weisende Oberfläche der ersten Scheibe 60 |
| 65 | Reflexionsfläche für ein Head-up-Display auf der nach außen weisende Oberfläche 63 der zweiten Scheibe 62 |
| 66 | Doppelpfeil |
| M | Mittelinie des Glases oder Glasbands in X-Richtung |
| D | Dicke des Dünnglassubstrats 54 |
| K | eine im Wesentlichen keilförmige Dickenänderung K des Dünnglassubstrat 54 |
| $K_{L1}$ | Konturlinie der im Wesentlichen keilförmigen Dickenänderung K des Dünnglassubstrat 54 |
| $K_{L2}$ | Konturlinie der im Wesentlichen keilförmigen Dickenänderung K des Dünnglassubstrat 5 |
| $K_{L3}$ | Konturlinie der im Wesentlichen keilförmigen Dickenänderung K des Dünnglassubstrat 5 |
| V | eine Verwölbung des Dünnglassubstrats 54 |
| $V_{L1}$ | Konturlinie der Verwölbung V des Dünnglassubstrat 54 |
| $V_{L2}$ | Konturlinie der Verwölbung V des Dünnglassubstrat 54 |

H   Höhe der Erhebung oder des Ziehstreifens
$O_{pl}$   Oberfläche eines ideal planen Dünnglassubstrats
Q   Quererstreckung einer Erhebung oder Ziehstreifens quer, insbesondere senkrecht zur Längsrichtung der Erhebung oder des Ziehstreifens

**Patentansprüche**

1.  Verfahren zur Herstellung eines Dünnglassubstrats, vorzugsweise zur kontinuierlichen Herstellung eines Dünnglassubstrats, bei welchem

    nach dem Schmelzen und vor einer Heißformung die Viskosität des zu formenden oder zumindest teilweise geformten Glases für das zu erhaltende Dünnglassubstrat definiert eingestellt wird
    und
    das heißzuformende Glas vor Abgabe an eine Einrichtung zur Heißformung in dessen Viskosität definiert eingestellt, insbesondere durch eine definierte Abkühlung eingestellt wird und bei welchem für die Viskosität $\eta_1$ für eine erste Strecke für eine Entfernung bis zu 1,5 m nach dem Bauteil zur Durchsatzregulierung des Glasstroms die nachfolgende Gleichung gilt,
    bei welcher $y_1$ jeweils die Entfernung zu einem Ort unmittelbar hinter dem Bauteil zur Durchsatzregulierung des Glasstroms bezeichnet:

    $$\lg \eta_1(y_1)\ /dPas = (\lg \eta_{01}\ /dPas + a_1(y_1))$$

    mit

    $$0\ m \leq y_1 \leq 1,5\ m$$

    $$3,75 \leq \lg \eta_{01}\ /dPas \leq 4,5$$

    $$a_1(y_1) = 1,00\ /m\ *\ y_1.$$

2.  Verfahren zur Herstellung eines Dünnglassubstrats nach Anspruch 1, bei welchem eine Einstellung der Viskosität vor der Einlauflippe, vorgenommen wird, insbesondere vor der Abgabe auf ein Metallbad vorgenommen wird.

3.  Verfahren zur Herstellung eines Dünnglassubstrats nach Anspruch 1 oder 2, bei welchem eine Einstellung der Viskosität vor dem Bauteil zur Durchsatzregulierung des Glasstroms vorgenommen wird,
    insbesondere vor der Abgabe auf ein Metallbad vorgenommen wird.

4.  Verfahren zur Herstellung eines Dünnglassubstrats nach einem der Ansprüche 1, 2 oder 3, bei welchem die Viskosität des zu formenden oder zumindest teilweise geformten Glases

    vorzugsweise am Kanal-Ende der Schmelzwanne und vor dem Bauteil zur Durchsatzregulierung des Glasstroms mindestens $\lg \eta\ /dPas = 3,75$ bis vorzugsweise höchstens 4,5 beträgt und/oder
    für die Viskosität $\eta_2$ für eine zweite Strecke mit einer Entfernung von 12 m nach dem Bauteil zur Durchsatzregulierung des Glasstroms bis zu einer Entfernung von 16 m nach dem Bauteil zur Durchsatzregulierung des Glasstroms für die Viskosität $\eta_2$ die nachfolgende Gleichung gilt, bei welcher $y_2$ jeweils die Entfernung zum Ort unmittelbar hinter dem Bauteil zur Durchsatzregulierung des Glasstroms bezeichnet:

    $$\lg \eta_2(y_2)\ /dPas = (\lg \eta_{02}\ /dPas + a_2(y_2))$$

    mit

$$12 \text{ m} \leq y_2 \leq 16 \text{ m}$$

$$7{,}05 \leq \lg \eta_{02} / dPas \leq 7{,}6$$

$$a_2(y_2) = 0{,}788 / m * (y_2 - 12 \text{ m}).$$

5. Verfahren zur Herstellung eines Dünnglassubstrats nach einem der vorstehenden Ansprüche, bei welchem zur Heißformung ein Ziehverfahren, insbesondere ein Floatverfahren, ein Down-Draw-Verfahren und/oder ein Fusion-Verfahren, insbesondere ein Overflow-Fusion-Downdraw-Verfahren verwendet wird.

6. Verfahren zur Herstellung eines Dünnglassubstrats nach einem der vorstehenden Ansprüche, bei welchem zur Heißformung des Dünnglassubstrats ein Li-Al-Si-Glas, insbesondere mit einem $Li_2O$-Gehalt von 4,6 Gew.-% bis 5,4 Gew.-% und einem $Na_2O$-Gehalt von 8,1 Gew.-% bis 9,7 Gew.-% und einem $Al_2O_3$-Gehalt von 16 Gew.-% bis 20 Gew.-% verwendet wird, ein Al-Si-Glas, ein Borosilicatglas oder ein K-Na-Si-Glas verwendet wird.

7. Verfahren zur Herstellung eines Dünnglassubstrats nach einem der vorstehenden Ansprüche, bei welchem Erhebungen auf einer der Hauptoberflächen des Dünnglassubstrats, insbesondere langgezogene Erhebungen, welche sich im Wesentlichen in Normalenrichtung erheben, ausgebildet werden, welche eine Längserstreckung größer als das Zweifache, bevorzugt Dreifache, besonders bevorzugt das Fünffache einer Quererstreckung der Erhebung aufweisen und eine Höhe aufweisen, die im Mittel, bereinigt von keilförmigen Dickenschwankungen und Verwölbungen bei arithmetischer Mittelung einer Analysefläche von $10 * 10 \text{ cm}^2$, vorzugsweise in der Mitte eines heißgeformten Glasbands senkrecht zur Ziehrichtung, kleiner als 100 nm, bevorzugt kleiner als 90 nm, besonders bevorzugt kleiner als 80 nm ist und bei welchen die Quererstreckung der Erhebung jeweils kleiner als 40 mm ist.

8. Verfahren zur Herstellung eines Dünnglassubstrats nach einem der vorstehenden Ansprüche, bei welchem durch die Heißformung das Dünnglassubstrat im Wesentlichen eine keilförmige Dickenänderung K über eine Länge von 1 m senkrecht zur Ziehrichtung mit einem Wert von weniger als 100 $\mu$m aufweist und/oder
durch die Heißformung das Dünnglassubstrat eine Verwölbung V über eine Länge von 1 m senkrecht zur Ziehrichtung mit einem Wert von weniger als 600 $\mu$m aufweist.

9. Verfahren zur Herstellung eines Dünnglassubstrats nach einem der vorstehenden Ansprüche, bei welchem durch die Heißformung das Dünnglassubstrat eine mittlere Dicke, gemittelt über eine Fläche der ersten und der zweiten Hauptoberfläche des Dünnglassubstrats von mindestens 10 cm * 10 cm von 0,3 mm bis 2,6 mm erhält, bevorzugt eine Dicke von 0,7 bis 2,5 mm erhält, besonders bevorzugt eine Dicke von etwa 0,7 mm oder eine Dicke von etwa 2,54 mm erhält.

**Claims**

1. A method for producing a thin glass substrate, preferably for continuously producing a thin glass substrate; wherein

   after melting and prior to a hot forming process, the viscosity of the glass that is to be formed or has at least partially been formed for the thin glass substrate to be obtained is adjusted in a defined manner; and
   prior to being delivered to a device for hot forming, the viscosity of the glass to be hot formed is adjusted in a defined manner, in particular adjusted by defined cooling; and wherein the following equation applies for the viscosity $\eta_1$ for a first stretch over a distance of up to 1.5 m downstream of the component for throughput control of the glass flow, with $y_1$ indicating the distance to a location immediately downstream of the component for throughput control of the glass flow:

$$\lg \eta_1(y_1) / dPa{\cdot}s = (\lg \eta_{01} / dPa{\cdot}s + a_1(y_1))$$

   with

$$0\ m \le y_1 \le 1.5\ m$$

$$3.75 \le lg\ \eta_{01}\ /dPa{\cdot}s \le 4.5$$

$$a_1(y_1) = 1.00\ /m * y_1.$$

2. The method for producing a thin glass substrate according to claim 1, wherein the viscosity is adjusted upstream of the spout, in particular before being delivered onto a metal bath.

3. The method for producing a thin glass substrate according to claim 1 or 2, wherein the viscosity is adjusted upstream of the component for throughput control of the glass flow, in particular before being delivered onto a metal bath.

4. The method for producing a thin glass substrate according to any one of claims 1, 2, or 3, wherein the glass that is to be formed or has at least partially been formed has a viscosity

of at least $lg\ \eta\ /dPa{\cdot}s = 3.75$ to preferably at most 4.5 preferably at the end of a channel of a melting tank and upstream of the component for throughput control of the glass flow; and/or
wherein the following equation applies for the viscosity $\eta_2$ for a second stretch between a distance of 12 m downstream of the component for throughput control of the glass flow and a distance of 16 m downstream of the component for throughput control of the glass flow, with $y_2$ indicating the distance to a location immediately downstream of the component for throughput control of the glass flow:

$$lg\ \eta_2(y_2)\ /dPa{\cdot}s = (lg\ \eta_{02}\ /dPa{\cdot}s + a_2(y_2))$$

with

$$12\ m \le y_2 \le 16\ m$$

$$7.05 \le lg\ \eta_{02}\ /dPa{\cdot}s \le 7.6$$

$$a_2(y_2) = 0.788\ /m * (y_2 - 12\ m).$$

5. The method for producing a thin glass substrate according to any one of the preceding claims, wherein a drawing process is used for the hot forming, in particular a float process, a down-draw process, and/or a fusion process, in particular an overflow fusion down-draw process.

6. The method for producing a thin glass substrate according to any one of the preceding claims, wherein an Li-Al-Si glass is used for the hot forming of the thin glass substrate, in particular with an $Li_2O$ content from 4.6 wt% to 5.4 wt% and an $Na_2O$ content from 8.1 wt% to 9.7 wt% and an $Al_2O_3$ content from 16 wt% to 20 wt%, an Al-Si glass, a borosilicate glass, or a K-Na-Si glass.

7. The method for producing a thin glass substrate according to any one of the preceding claims, wherein elevations are formed on one of the main surfaces of the thin glass substrate, in particular elongated elevations substantially rising in normal direction, which have a longitudinal extent that is greater than two times, preferably three times, more preferably five times a transverse extent of the elevation, and which have a height which on average is less than 100 nm, preferably less than 90 nm, most preferably less than 80 nm, adjusted for wedge-shaped thickness variations and warpage with arithmetic averaging of an analysis surface area of $10 * 10\ cm^2$, preferably in the centre of a hot-formed glass ribbon perpendicular to the drawing direction, and with a transverse extent of the elevation smaller than 40 mm in each case.

8. The method for producing a thin glass substrate according to any one of the preceding claims, wherein a substantially wedge-shaped thickness variation K of the thin glass substrate as caused by the hot forming has a magnitude of less than 100 $\mu$m over a length of 1 m perpendicular to the drawing direction; and/or
wherein a warpage V of the thin glass substrate as caused by the hot forming has a magnitude of less than 600 $\mu$m over a length of 1 m perpendicular to the drawing direction.

**9.** The method of producing a thin glass substrate according to any one of the preceding claims, wherein with the hot forming, the thin glass substrate is obtained with an average thickness from 0.3 mm to 2.6 mm, preferably a thickness from 0.7 to 2.5 mm, most preferably a thickness of about 0.7 mm, or a thickness of about 2.54 mm, averaged over a surface area of the first and second main surfaces of the thin glass substrate of at least 10 cm * 10 cm.

**Revendications**

**1.** Procédé de production d'un substrat en verre mince, de préférence pour la production en continu d'un substrat en verre mince, selon lequel

après la fusion et avant un formage à chaud, la viscosité du verre à mettre en forme ou mis en forme au moins en partie est réglée de manière définie pour le substrat en verre mince devant être obtenu, et
le verre devant être formé à chaud est réglé de manière définie en ce qui concerne sa viscosité, notamment par un refroidissement défini, avant le transfert à un dispositif de formage à chaud, et selon lequel
pour la viscosité $\eta_1$ pour un premier trajet pour une distance allant jusqu'à 1,5 m après le composant destiné à la régulation du débit du flux de verre, on applique l'équation ci-dessous,
où $y_1$ désigne respectivement la distance jusqu'à un lieu situé directement après le composant destiné à la régulation du débit du flux de verre :

$$\lg \eta_1(y_1)\, /\mathrm{dPas} = (\lg \eta_{01}\, /\mathrm{dPas} + a_1(y_1))$$

avec

$$0\ \mathrm{m} \leq y_1 \leq 1,5\ \mathrm{m}$$

$$3,75 \leq \lg \eta_{01}\, /\mathrm{dPas} \leq 4,5$$

$$a_1(y_1) = 1,00\ /\mathrm{m} * y_1.$$

**2.** Procédé de production d'un substrat en verre mince selon la revendication 1, selon lequel un réglage de la viscosité est effectué avant la lèvre d'entrée, notamment avant le transfert sur un bain de métal liquide.

**3.** Procédé de production d'un substrat en verre mince selon la revendication 1 ou 2, selon lequel un réglage de la viscosité est effectué avant le composant destiné à la régulation du débit du flux de verre, notamment avant le transfert sur un bain de métal liquide.

**4.** Procédé de production d'un substrat en verre mince selon l'une des revendications 1, 2 ou 3, selon lequel la viscosité du verre à mettre en forme ou mis en forme au moins en partie

de préférence à l'extrémité du canal de la cuve de fusion et avant le composant destiné à la régulation du débit du flux de verre, vaut au moins $\lg \eta\, /\mathrm{dPas} = 3{,}75$ jusqu'à de préférence au maximum 4,5 et/ou
pour la viscosité $\eta_2$ pour un deuxième trajet avec une distance allant de 12 m après le composant destiné à la régulation du débit du flux de verre jusqu'à une distance de 16 m après le composant destiné à la régulation du débit du flux de verre, l'équation ci-dessous s'applique pour la viscosité $\eta_2$, où $y_2$ désigne respectivement la distance jusqu'au lieu situé directement après le composant destiné à la régulation du débit du flux de verre :

$$\lg \eta_2(y_2)\, /\mathrm{dPas} = (\lg \eta_{02}\, /\mathrm{dPas} + a_2(y_2))$$

avec

$$12 \text{ m} \leq y_2 \leq 16 \text{ m}$$

$$7,05 \leq \lg \eta_{02} / \text{dPas} \leq 7,6$$

$$a_2(y_2) = 0,788 / \text{m} * (y_2 - 12 \text{ m}).$$

5. Procédé de production d'un substrat en verre mince selon l'une des revendications précédentes, selon lequel on utilise pour le formage à chaud un procédé d'étirage, notamment un procédé de flottage, un procédé d'étirage vers le bas et/ou un procédé de fusion, notamment un procédé de fusion par débordement et étirage vers le bas.

6. Procédé de production d'un substrat en verre mince selon l'une des revendications précédentes, selon lequel on utilise un verre Li-Al-Si, notamment avec une teneur en $Li_2O$ allant de 4,6 % en poids à 5,4 % en poids et une teneur en $Na_2O$ allant de 8,1 % en poids à 9,7 % en poids et une teneur en $Al_2O_3$ allant de 16 % en poids à 20 % en poids, un verre Al-Si, un verre borosilicaté ou un verre K-Na-Si, pour le formage à chaud du substrat en verre mince.

7. Procédé de production d'un substrat en verre mince selon l'une des revendications précédentes, selon lequel on réalise des saillies sur l'une des surfaces principales du substrat en verre mince, notamment des saillies allongées qui s'élèvent essentiellement dans la direction de la normale et qui présentent une dimension longitudinale supérieure à deux fois, de préférence trois fois, et de manière particulièrement avantageuse cinq fois la dimension transversale de la saillie et présentent une hauteur qui, corrigée des variations d'épaisseur en forme de coin et des gauchissements lors du calcul arithmétique de la moyenne d'une surface d'analyse de 10 * 10 $cm^2$, de préférence au milieu d'un ruban de verre formé à chaud, perpendiculairement à la direction d'étirage, est en moyenne inférieure à 100 nm, de préférence inférieure à 90 nm, et de manière particulièrement avantageuse inférieure à 80 nm, et pour lesquelles la dimension transversale de la saillie est respectivement inférieure à 40 mm.

8. Procédé de production d'un substrat en verre mince selon l'une des revendications précédentes, selon lequel, du fait du formage à chaud, le substrat en verre mince présente essentiellement une variation d'épaisseur en forme de coin K sur une longueur de 1 m, perpendiculairement à la direction d'étirage, d'une valeur inférieure à 100 $\mu$m et/ou, du fait du formage à chaud, le substrat en verre mince présente un gauchissement V sur une longueur de 1 m, perpendiculairement à la direction d'étirage, d'une valeur inférieure à 600 $\mu$m.

9. Procédé de production d'un substrat en verre mince selon l'une des revendications précédentes, selon lequel, du fait du formage à chaud, le substrat en verre mince est doté d'une épaisseur moyenne, dont la moyenne est calculée sur une aire de la première et de la deuxième surface principale du substrat en verre mince d'au moins 10 cm * 10 cm, allant de 0,3 mm à 2,6 mm, de préférence d'une épaisseur allant de 0,7 à 2,5 mm, et est doté de manière particulièrement avantageuse d'une épaisseur d'environ 0,7 mm ou d'une épaisseur d'environ 2,54 mm.

Fig. 1

Strömungs- oder Ziehrichtung

EP 3 558 879 B1

30

EP 3 558 879 B1

Fig. 2

Fig. 3

Fig. 4

Viskosität lg η / dPas

48 49 50 51

Strömungs- oder Ziehrichtung

Entfernung

Y

Fig. 6

Fig. 5

Fig. 7

Fig. 8

EP 3 558 879 B1

Fig. 9

Fig. 10

EP 3 558 879 B1

EP 3 558 879 B1

## Fig. 11

## Fig. 12

Fig. 14

Fig. 13

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2309445 A1
- JP 7053223 A
- WO 2016048815 A1
- KR 20150063947 A
- DE 102013203624 A1
- DE 102006051637 A1
- DE 102016125488